(19) Europäisches Patentamt
European Patent Office
Office européen des brevets

(11) EP 0 755 415 B1

(12) **EUROPEAN PATENT SPECIFICATION**

(45) Date of publication and mention of the grant of the patent: **26.06.2002 Bulletin 2002/26**

(21) Application number: **95917318.8**

(22) Date of filing: **12.04.1995**

(51) Int Cl.[7]: **C08G 59/38**, C08L 63/00, C08C 19/06, C08L 53/02

(86) International application number: **PCT/EP95/01382**

(87) International publication number: **WO 95/28431 (26.10.1995 Gazette 1995/46)**

(54) **EPOXIDIZED LOW VISCOSITY RUBBER TOUGHENING MODIFIERS FOR EPOXY RESINS**

EPOXYDIERTER KAUTSCHUK MIT NIEDRIGER VISCOSITÄT UND SEINE VERWENDUNG ZUR ÄNDERUNG DER ZÄHIGKEIT VON EPOXYDHARZEN

MODIFICATEURS DE DURCISSEMENT D'UN CAOUTCHOUC DE FAIBLE VISCOSITE AYANT SUBI UNE EPOXYDATION, DESTINES A DES RESINES EPOXY

(84) Designated Contracting States:
**AT BE CH DE DK ES FR GB GR IE IT LI NL PT SE**

(30) Priority: **15.04.1994 US 228047**
**15.04.1994 US 228250**
**15.04.1994 US 228324**

(43) Date of publication of application:
**29.01.1997 Bulletin 1997/05**

(73) Proprietor: **KRATON Polymers Research B.V.**
**1031 CM Amsterdam (NL)**

(72) Inventors:
- **MASSE, Michael, Alan**
  **Richmond, TX 77469 (US)**
- **DANGAYACH, Kailash**
  **Houston, TX 77079 (US)**
- **ERICKSON, James, Robert**
  **Katy, TX 77450 (US)**
- **ST. CLAIR, David, John**
  **Houston, TX 77079 (US)**

(74) Representative:
**Kortekaas, Marcellinus C. J. A. et al**
**KRATON Polymers Research B.V.,**
**P.O. Box 37666**
**1030 BH Amsterdam (NL)**

(56) References cited:
**EP-A- 0 516 203**
**WO-A-95/02622**
**DE-A- 1 594 038**
**US-A- 3 073 792**
**US-A- 4 135 037**
**US-A- 5 247 026**

- **J.POLYMER SCI PART C:POLYMER LETTS, vol.28, no.9, 1990 pages 285 - 288 JIAN X. ETAL 'EPOXIDATION OF UNSATURATED POLYMERS WITH HYDROGEN PEROXIDE'**
- **J. APP. POLYMER SCI, vol.23, 1979 pages 3301 - 3309 UDIPI K. 'EPOXIDATION OF STYRENE BUTADIENE COPOLYMERS'**
- **DATABASE WPI Week 199227, Derwent Publications Ltd., London, GB; Class A12, AN 1992-224081 & JP 04 153 252 A (ASAHI CEM IND CO LTD) 26 May 1992**
- **DATABASE WPI Week 199237, Derwent Publications Ltd., London, GB; Class A12, AN 1992-304179 & JP 04 209 648 A (TOSHIBA CHEM CORP) 31 July 1992**
- **DATABASE WPI Week 197415, Derwent Publications Ltd., London, GB; Class A21, AN 1974-27744V & JP 48 084 189 A (MATSUSHITA ELECTRIC WORKS LTD) 08 November 1973**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention concerns the use of epoxidized low viscosity polydiene polymers as toughening modifiers for blends of aromatic epoxy resins, cycloaliphatic epoxy resins, and mixtures thereof. More specifically, the invention relates to particular epoxidized low viscosity polydiene polymers.

Cured epoxy resins are typically strong, rigid, hard materials. Further, because of their chemical constitution they adhere strongly to many substrate materials. These physical characteristics of cured epoxy resins make them useful in a broad range of applications. One disadvantage of cured epoxy resins is their brittle character. When subjected to impact, cyclic stresses, thermal stresses, or differences in adhesive-substrate expansivities, epoxy resins tend to fail at relatively low applied stresses in a brittle manner. For example, cycloaliphatic epoxy resins are generally known to be useful in a wide range of products such as filament-wound composites, as encapsulants for electrical products and in adhesives and coatings (such resins include the Union Carbide Cycloaliphatic Epoxides and CYRACURE resins) but have the disadvantage that they are very brittle when cured. This brittleness makes them unsuitable for many applications in coatings where brittleness leads to poor adhesion, in structural adhesives where brittleness causes poor impact resistance and in electrical encapsulants where brittleness leads to poor thermal shock resistance. Thus, it is clear that it would be advantageous if a way could be found to impart a degree of flexibility to such epoxy resins while retaining most, if not all, of their advantageous characteristics.

The goal of much effort in this area has been to improve the toughness of, or in other words the energy required to fracture, epoxy resins. Improvements in this regard would lead to mechanically superior materials.

Therefore, it would be advantageous if an epoxy resin composition with increased toughness could be achieved. Importantly, the desired increase in toughness must occur with little or no sacrifice in the beneficial mechanical properties of epoxy resins such as strength, rigidity, hardness, and adhesion.

One route to this improvement is to incorporate a rubber into the epoxy matrix. Increases in toughness by incorporation of a rubber phase in an epoxy matrix are well known. Carboxy functional rubbers, as described in U.S. Patent Specification No. 3,823,107 entitled "Epoxy Resin Curing Agent Compositions, Their Preparation and Use," have been used as modifiers for epoxy resins. These carboxy functional modifiers suffer the disadvantage that they must be pre-reacted with the epoxy resin before cure so that the useful improvements in properties are achieved. Anhydride or acid functional graft copolymers, as described in U.S. Patent Specification No. 5,115,019 entitled "Carboxy-Functional Hydrogenated Block Copolymer Dispersed in Epoxy Resin," and U.S. Statutory Invention Registration No. H 1405, entitled "Epoxy Resin Composition," have been used as modifiers for epoxy resins. These rubbers also suffer the disadvantage that pre-reaction is required. Further, in some cases solvent blending and formation of emulsions of the polymeric modifier is required. The processes required to disperse these polymers possess the further disadvantage that the resulting dispersion of rubber in epoxy is sensitive to the process parameters such as temperature and shear rate during mixing, length of time of mixing, and type and amount of solvent so that inconsistent products are produced with varying properties.

Another disadvantage of epoxy resins is their propensity to absorb water leading to lowered glass transition temperatures and lessened mechanical properties. The objective of efforts in this area has been to reduce the amount of water absorbed by incorporating strongly hydrophobic materials into epoxy resins.

Low viscosity epoxidized polydiene polymers are known to be useful in adhesives. Such polymers are described in U.S. Patent Specification No. 5,229,464. These liquid epoxidised polymers have a relatively high degree of flexibility and respond to applied forces in a ductile manner. Compatible blends of the polymers of the above-described patent and epoxy resins are described in U.S. Patent Specification No. 5,332,783. The blends described in the aforementioned patent specification have the disadvantage that their compatibility with epoxy resins is limited. Their limited compatibility does not extend to a broad range of such epoxy resins and curing agents, and compatibilizing curing agents are required. They have the further disadvantage that even when marginally compatible, these polymers do not yield final cured epoxy resins having the desired improved toughness. Additionally, the compatibilizing curing agents give rise to cured epoxy resins of significantly reduced rigidity which are therefore of limited applicational use.

It has now been found that polymers of generally a high epoxy content are highly compatible with aromatic and/or cycloaliphatic epoxy resins and yield cured products with improved and advantageous properties. It has also been established that the level of epoxy content for easy compatibility of polymer and epoxy resin varies with the styrene content of the epoxidised polymer.

The present invention provides a toughened epoxy resin composition comprising :

(a) a curable aromatic and/or a curable cycloaliphatic epoxy resin.

(b) an epoxidised low viscosity polydiene polymer having an overall peak molecular weight as determined by GPC in the range of from 1100 to 300,000, and having the structural formula

$$(A\text{-}B\text{-}A_p)_n\text{-}Y_r\text{-}(A_q\text{-}B)_m$$

wherein Y is a coupling agent or coupling monomer or initiator, and wherein each A and each B independently is a polymer block which is a homopolymer block of conjugated diolefin monomers, a copolymer block of conjugated diolefin monomers, or a copolymer block of a conjugated diolefin monomer and a vinyl aromatic hydrocarbon monomer, each A block having a molecular weight in the range of from 100 to 6,000 and each B block having a molecular weight in the range of from 1000 to 15,000, n is greater than 0, r is 0 or 1, m is greater than or equal to 0, n + m is in the range of from 1 to 100, and p and q may be 0 or 1,
wherein the A blocks have a greater concentration of di-, tri-, and tetrasubstituted unsaturation sites than have the B blocks, and
(c) a curing agent

wherein the epoxidised low viscosity polydiene polymer is selected from polymers of the formula I-B; I-B/S; I/S-B; I/S-B/I; I-B/I; I/B-B; I/B-B/S; B/I-B/S; B-B/S; B/S-B;
$B_{mono\ substituted}$-$B_{Disubstituted}$; $(I\text{-}B)_4$; I/S-B-I/S;
B-I/S-B; B/S-I-B/S; or I-S/B-I;
in which I is isoprene, B is butadiene, S is styrene and a slash indicates a random copolymer block,

(i) contains less than 5% by weight vinyl aromatic hydrocarbon and has an epoxy content of in the range of from 3.0 to 7.0 milliequivalents (meq) per gram of polymer
or
(ii) contains 5% or more or, for aromatic epoxy resin blends, in the range of from 5 to less than 20% by weight vinyl aromatic hydrocarbon and has an epoxy content of in the range of from 2.0 to 7.0 meq/g
or, for aromatic epoxy resin blends,
(iii) contains 20%-60% by weight vinyl aromatic hydrocarbon and has an epoxy content of in the range of from 1.5 to 7.0 meq/g, with the proviso that if the epoxy resin is a curable aromatic epoxy resin, then the epoxidized low viscosity polydiene polymer has an epoxy content greater than 3 meq/g.

The low viscosity epoxidized polymers utilised in the present invention yield novel cured epoxy resin compositions having a superior balance of properties. The beneficial properties of the cured epoxy resin composition such as strength, rigidity, and hardness are maintained at high and useful levels while the toughness is simultaneously increased. Therefore, the compositions of the present invention present a broad utility. Additionally, the specified epoxidized polymers can be simply blended with epoxy resins before cure with no pre-reaction or solvent required. Furthermore, it is anticipated that the strongly hydrophobic character of the epoxidized polydiene polymers will reduce the amount of water absorbed by the rubber modified epoxy resin.

The invention composition includes an aromatic and/or a cycloaliphatic epoxy resin.

Suitable aromatic epoxy resins include glycidyl ethers prepared by the reaction of epichlorohydrin with an aromatic compound containing at least one hydroxyl group carried out under alkaline reaction conditions. The epoxy resin products obtained when the hydroxyl group-containing compound is bisphenol-A are represented by the structure below wherein n is zero or a number greater than 0, commonly in the range of from 0 to 10, preferably in the range of from 0 to 2.

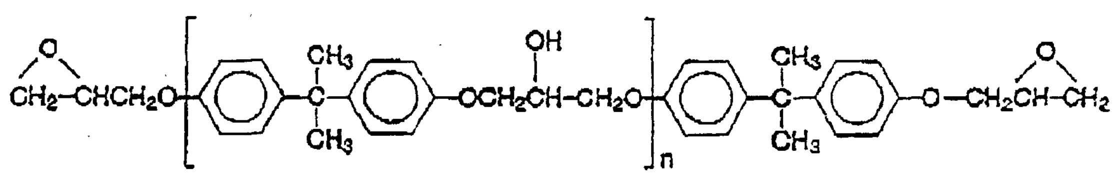

Other suitable epoxy resins can be prepared by the reaction of epichlorohydrin with mononuclear di- and tri-hydroxy phenolic compounds such as resorcinol and phloroglucinol, or selected polynuclear polyhydroxy phenolic compounds such as bis (p-hydroxyphenyl)methane and 4,4'-dihydroxybiphenyl.

Aromatic epoxy resins suitable for the invention compositions have molecular weights generally the range of from 86 to 10,000, preferably 200 to 1500. The commercially-available epoxy resin EPON Resin 828 (EPON is a trademark), a reaction product of epichlorohydrin and 2,2-bis(4-hydroxyphenylpropane) (bisphenol-A) having a molecular weight of about 400, an epoxide equivalent (ASTM D-1652) of about 185-192, and an n value (from the formula

above) of about 0.13, is presently the preferred aromatic epoxy resin because of its low viscosity, mechanical performance, and commercial availability. Other examples of aromatic epoxy resins are liquid resins such as EPON 825, a reaction product of epichlorohydrin and bisphenol-A with an n value of about 0.04, and EPON 826, a reaction product of epichlorohydrin and bisphenol-A with an n value of about 0.08, and solid resins such as EPON 1001, a reaction product of epichlorohydrin and bisphenol-A with an n value of about 2.3, EPON 1002, a reaction product of epichlorohydrin and bisphenol-A with an n value of about 3.4, and EPON 1031, a reaction product of epichlorohydrin and tetraphenylol ethane with an epoxide equivalent weight of about 220.

A cycloaliphatic epoxy resin component of the composition can be any curable cycloaliphatic resin having, on the average, more than one epoxide group per molecule and may bear substituents which do not materially interfere with the curing reaction.

Suitable cycloaliphatic epoxy resins include those made by oxidation of cyclic polyolefins with a peracid, typically peracetic acid. The major suppliers of suitable cycloaliphatic epoxy resins are Union Carbide and Ciba Geigy. The resins are marketed by Union Carbide as Cycloaliphatic Epoxides and, more recently, under the trade name CYRACURE. Typical structures for these resins are given in Union Carbide brochures "Cycloaliphatic Epoxide Systems", 9/87, and "CYRACURE Cycloaliphatic Epoxides, Cationic UV Cure", 4/92. A particularly preferred cycloaliphatic epoxy resin is Union Carbide's ERL-4221, also sold as CYRACURE UVR-6110 (3,4-epoxycyclohexylmethyl-3,4-epoxycyclohexane carboxylate). This is also the most widely used cycloaliphatic epoxy resin in the industry today. The epoxidized polydiene polymers of this invention have particularly good compatibility with CYRACURE UVR-6110, making them particularly good tougheners for this resin.

Other cycloaliphatic epoxy resins include those having glycidyl ether epoxide groups. Glycidyl ether epoxy resins are typically made by reaction of a diol or polyol with epichlorohydrin. A particularly preferred glycidyl ether epoxy resin is EPONEX 1510 ("EPONEX" is a trade mark; from Shell Chemical Company, made by reaction of hydrogenated bis-phenol A with epichlorohydrin.

Aromatic epoxy resins may be used in conjunction with a cycloaliphatic epoxy resin. However, the presence of aromatic epoxy resins in a formulation can reduce the resistance of the composition to degradation by light so for certain uses, they may only form a minor portion of the total amount of epoxy resin.

The epoxy content range able to impart the advantageous properties of the present invention, varies slightly depending on whether it is an aromatic epoxy resin or a cycloaliphatic epoxy resin that is the predominant curable resin in the composition. Herein comments regarding required or preferred polymer epoxy contents, polymer vinyl aromatic hydrocarbon levels, curing agents, additional composition components etc. are made in relation to either an aromatic epoxy resin composition or a cycloaliphatic epoxy resin composition, which should be understood to indicate a composition in which the specified resin is the predominant epoxy resin. If equal amounts of each epoxy resin are present then either set of comments are applicable.

Monoepoxide resins can also be used at low levels as reactive diluents to reduce viscosity.

Polymers containing ethylenic unsaturation can be prepared by copolymerizing one or more olefins, particularly diolefins, by themselves or with one or more alkenyl aromatic hydrocarbon monomers. The copolymers may, of course, be random, tapered, block or a combination of these, as well as linear, star or radial.

The polymers containing ethylenic unsaturation or both aromatic and ethylenic unsaturation may be prepared using anionic initiators or polymerization catalysts. Such polymers may be prepared using bulk, solution or emulsion techniques. When polymerized to high molecular weight, the polymer containing at least ethylenic unsaturation will, generally, be recovered as a solid such as a crumb, a powder, or a pellet. When polymerized to low molecular weight, it may be recovered as a liquid such as in the present invention. Polymers containing ethylenic unsaturation and polymers containing both aromatic and ethylenic unsaturation are available commercially from several suppliers.

In general, when solution anionic techniques are used, copolymers of conjugated diolefins and alkenyl aromatic hydrocarbons are prepared by contacting the monomer or monomers to be polymerized simultaneously or sequentially with an anionic polymerization initiator such as group IA metals, their alkyls, amides, silanolates, napthalides, biphenyls or anthracenyl derivatives. It is preferred to use an organo alkali metal (such as sodium or potassium) compound in a suitable solvent at a temperature in the range of from -150°C to 300°C, preferably at a temperature in the range of from 0°C to 100°C. Particularly effective anionic polymerization initiators are organo lithium compounds having the general formula:

$$RLi_n$$

wherein R is an aliphatic, cycloaliphatic, aromatic or alkyl-substituted aromatic hydrocarbon radical having in the range of from 1 to 20 carbon atoms and n is an integer in the range of from 1 to 4.

Conjugated diolefins which may be polymerized anionically include those conjugated diolefins containing from 4 to 24 carbon atoms such as 1,3-butadiene, isoprene, piperylene, methylpentadiene, phenyl-butadiene, 3,4-dimethyl-1,3-hexadiene, and 4,5-diethyl-1,3-octadiene. Isoprene and butadiene are the preferred conjugated diene monomers for use in the present invention because of their low cost and ready availability. Alkenyl (vinyl) aromatic hydrocarbons which may be copolymerized include vinyl aryl compounds such as styrene, various alkyl-substituted styrenes, alkoxy-substituted styrenes, vinyl naphthalene, and alkyl-substituted vinyl naphthalenes.

The epoxidized low viscosity polymers are of the general formula

$$(A\text{-}B\text{-}A_p)_n\text{-}Y_r\text{-}(A_q\text{-}B)_m \qquad (I)$$

wherein Y is a coupling agent or coupling monomer or initiator, and wherein A and B are polymer blocks which may be homopolymer blocks of conjugated diolefin monomers, copolymer blocks of conjugated diolefin monomers, or copolymer blocks of diolefin monomers and monoalkenyl aromatic hydrocarbon monomers. These low viscosity polymers may optionally contain up to 60% by weight or more of at least one vinyl aromatic hydrocarbon, preferably styrene. The A blocks should have a greater concentration of more highly substituted aliphatic double bonds than have the B blocks. Thus, the A blocks have a greater concentration of di-, tri-, and tetra-substituted unsaturation sites (aliphatic double bonds) per unit of block mass than do the B blocks. This produces a polymer wherein the most facile epoxidation occurs in the exterior blocks - the A blocks (1,1-disubstituted, 1,2-disubstituted, 1,1,2-trisubstituted and 1,1,2,2-tetrasubstituted olefinic epoxides). The arms can also be B-A-B and B-A.

Certain epoxidised polymers of this type are believed to be novel, and form a further aspect of the present invention. In such polymers, the A blocks have a molecular weight in the range of from 100 to 6,000, preferably 100 to 3,000, and most preferably 500 to 2,000, and the B blocks have a molecular weight in the range of from 1000 to 15,000, preferably 2,000 to 10,000, and most preferably 3,000 to 7,000; n is greater than 0, r is 0 or 1, m is greater than or equal to 0, and n + m is in the range of from 1 to 100; p and q may be 0 or 1.

The epoxidised polymers of the invention generally have an epoxy content in the range of from 1.5 to 7.0 milliequivalents of epoxy per gram of polymer (meq/g). The polymer may contain hydroxyl functionality and may be hydrogenated. Preferably, the polymers have an overall molecular weight (peak, as determined by GPC) in the range of from 1100 to 100,000, and most preferably 1100 to 20,000, and preferably are liquids. The polymers are block copolymers of at least two conjugated dienes, preferably isoprene and butadiene, and optionally a vinyl aromatic hydrocarbon.

The ability to form suitably compatible blends with epoxy resins is one primary feature of the molecules of the present invention. While the preferred epoxidized polymers are largely unsaturated, analogous hydrogenated polymers may also be suitable. In polymers of high epoxy and styrene content it is anticipated that suitable compatibility with epoxy resins will result even when all the unsaturation is consumed by hydrogenation. These polymers offer the further advantages of improved chemical resistance and improved thermo-oxidative, oxygen, ozone and ultraviolet stability.

The polymers of the present invention thus accomplishes the objective of providing novel epoxidized low viscosity polydiene polymers which are highly compatible with aromatic and cycloaliphatic epoxy resins, much more so than are the polymers described in the afore-mentioned U.S.-A-5,332,783 which were described there as having a preferred epoxy content of up to 3 milliequivalents of epoxy per gram of polymer. The low viscosity epoxidized polymers of the present invention yield novel cured epoxy resin compositions having a superior balance of properties. The beneficial properties of the cured epoxy resin composition such as strength, rigidity, and hardness are maintained at high and useful levels while the toughness is simultaneously increased. Therefore, the compositions of the present invention present a broad utility. Additionally, the epoxidized polymers of the present invention can be simply blended with epoxy resins before cure with no pre-reaction or solvent required.

Within the specified ranges of epoxy content and the above molecular weight ranges, these low viscosity polymers exhibit a high degree of compatibility for both aromatic and cycloaliphatic epoxy resins, which makes them very useful in "toughening" such resins so they can be better utilized in applications such as structural adhesives and coatings, especially primers. The low viscosity epoxidised polymers of the invention when used in blends with aromatic and/or cycloaliphatic epoxy resins may be present in an amount in the range of from 1 to 50% by weight, preferably 1 to 30% for aromatic epoxy resin blends or 5 to 20% for cycloaliphatic epoxy resins blends.

The most highly preferred low viscosity polymers for use herein are diblock polymers which fall within the scope of the general formula (I) above. The overall molecular weight of such diblocks is suitably in the range of from 1500 to 15000, preferably 3000 to 7000. Either of the blocks in the diblock may contain some randomly polymerized vinyl aromatic hydrocarbon as described above. For example, where I represents isoprene, B represents butadiene, S represents styrene, and a slash (/) represents a random copolymer block, the diblocks may have the following structures:

I-B; I-B/S; I/S-B; I-B/I; B/I-B/S; B-B/S;

or $B_{mono\text{-}substituted}$-$B_{Di\text{-}substituted}$

These diblocks are advantageous in that they exhibit lower viscosity and are easier to manufacture than the corresponding triblock polymers. Preferred triblock and star polymer forms however include I-B/S-I; I/S-B-I/S; I-S/B-I; and $(I\text{-}B)_4$.

The polymers of the invention may be prepared by conventional procedures such as those specified herein and in US-A-5229464.

For aromatic epoxy resin compositions, when the concentration of alkenyl aromatic hydrocarbon monomer in the epoxidized polymer is less than 5% by weight, the concentration of epoxide is in the range from 3 to 7 meq/g of polymer. When the concentration of alkenyl aromatic hydrocarbon monomer is in the range of from 5% to less than 20% by weight, the concentration of epoxide is in the range from 2 to 7 meq/g of polymer. When the concentration of vinyl aromatic hydrocarbon is in the range of from 20% or more e.g. up to 60% by weight, the concentration of epoxide is in the range of from 1.5 to 7 meq/g of polymer. If the epoxy levels are any lower, the components are not sufficiently compatible to toughen aromatic epoxy resins. Also, at lower levels, the mixing temperature required to mix, adequately, polymer and epoxy resin will have to be undesirably high. At higher epoxy levels, the polymers will be too compatible with and too soluble in the epoxy resin to achieve the desired phase separation upon curing. It will also raise the viscosity and the cost without any corresponding benefit.

The preferred epoxy levels are 3.5 to 6 meq/g for less than 5% vinyl aromatic hydrocarbon, 3 to 6 for 5 to 20%, and 1.5 to 6 for 20 to 60%. If the epoxy levels are lower, then cloud points of 85 °C or lower for blends with aromatic epoxy resins cannot be achieved without additional formulating ingredients. This is an indication of a uniform, compatible blend with uniform appearance and feel. Higher epoxy levels are not preferred for the same reason and also that they increase the viscosity and cost without any appreciable benefit.

It has been found that by the proper combination of unsaturation, epoxide level, and alkenyl aromatic monomer content, a low viscosity polydiene which possesses suitable compatibility with aromatic epoxy resins to yield an improved balance of properties can be made. The presence of epoxidation and unsaturation is required in the low viscosity polymers of this invention. The diene monomers remain unsaturated before epoxidation in the preferred polymers. When alkenyl aromatic monomers are present in aromatic epoxy resin compositions at concentrations of less than 5% by weight, the most preferred epoxide level is in the range of from 4.5 to 5.5 meq/g of polymer. When alkenyl aromatic monomers are incorporated at levels of 5% up to 20% by weight in the largely unsaturated polydiene block copolymer, its compatibility with epoxy resin is improved to such a degree that lower levels of epoxidation will yield improved rubber modified epoxy resins, and the most preferred range is from 4 to 5.5. When alkenyl aromatic monomers are present at concentrations of 20% or more, e.g. 20 to 60% by weight, the most preferred epoxide level is in the range of from 2 to 4.5 meq/g of polymer. These ranges are believed to be optimum because they allow aromatic epoxy resin blends to be made with a cloud point of no more than about 70°C (low end of range) and as low as 40 to 50°C (high end of range). It is believed that such compositions have the proper phase separation to achieve compositions with the best combination of properties, appearance, and feel.

Blends of aromatic epoxy resins with the higher epoxy content polymers of the present invention are physically different than blends of epoxy polymers with the lower epoxy content epoxidized polymers of US-A-5,229,464 and US-A-5,332,783. The blends of the present invention are stronger and more rigid. The uses for the blends of the present invention are ones which require a modified epoxy composition with better toughness and strength than the blends of US-A-5,332,783. It appears that the improved compatibility of the polymers of the present invention results in a modified epoxy resin in which there is better dispersion of the rubber phase in the epoxy matrix through better interfacial bonding. This improved compatibility is due to the presence of greater amounts of epoxy and,in some polymers, the presence of significant amounts of vinyl aromatic hydrocarbon.

In order to get the desired balance of properties for the compositions of the present invention, i.e., improved toughness with little or no sacrifice in strength, rigidity, or adhesion, particularly for the aromatic epoxy resin compositions, it is important that there be some phase separation between the components in the final cured product. If the incorporated epoxidized rubber will not phase separate from the epoxy matrix during cure, the final product will be too weak and not stiff enough for end uses such as structural adhesives, coatings, and electrical encapsulation. If the amount of phase separation is too great, then the epoxidized polymer will not be finely dispersible in the epoxy matrix resulting in no property improvement and a deleterious degradation of final product appearance and product uniformity. The goal is to achieve a composition which is on the edge of compatibility and incompatibility and each epoxy resin formulation may have its own particular epoxidized polydiene polymer that works best in this regard. The epoxy level, degree of unsaturation, and styrene content of the preferred polymers of this invention are specified herein to achieve such a degree of compatibility with epoxy resins.

Aromatic epoxy resin matrices are typically very brittle. In order to improve their performance, their fracture toughness can be increased. Fracture toughness is a measure of energy required to fracture a material. One way to increase the energy required for fracture is to incorporate a relatively low modulus second phase in the epoxy resin

matrix. This second phase acts to build in sites of stress concentration where local deformation can occur rather than catastrophic bulk deformation (brittle fracture). Also, this second phase can act to blunt or terminate growing cracks and it can absorb energy by deformation and cavitation.

However, a second mode of matrix toughening can be pursued. In this second mode, the brittle aromatic epoxy resin matrix is flexibilized by incorporating a flexible additive (diluent) molecularly into the covalent resin network. This second mode by itself would give improvements in toughness but would cause significantly more degradation of the strength and rigidity of the matrix than the first mode.

The use of both modes of toughening simultaneously leads to toughnesses higher than achievable by either mode alone. The first mode of toughening is the mode described above which is accomplished by blending with the aromatic epoxy resin an epoxidized low viscosity polydiene polymer rubber ranging from one containing a high amount of vinyl aromatic hydrocarbon which is epoxidized in an amount in the range of from 1.5 to 7 meq of epoxy per gram of polymer to the same polymer without vinyl aromatic hydrocarbon epoxidized in the range of from 3 to 7 meq/g. The second mode of improvement in toughening is achieved by blending with a low molecular weight reactive diluent.

The mixture of the epoxidized rubber and low molecular weight reactive diluent, then, contains one fraction which due to its composition is only marginally compatible with the epoxy matrix (the epoxidized rubber) and another fraction which is relatively compatible with the epoxy matrix (the low molecular weight reactive diluent). The marginally compatible fraction forms a minor phase upon curing of the aromatic epoxy resin and acts as the first mode toughener. The relatively compatible fraction is molecularly incorporated into the epoxy network and so acts as the second mode toughener. For best results, the weight ratio of the epoxidized polymer to the low molecular weight reactive diluent should be in the range of from 100/1 to 1/10. The diluent may replace part of the epoxidized polymer in the composition of the invention.

Examples of useful flexibilizers are low molecular weight epoxy functional diluents e.g. aromatic monofunctional epoxy resins, cycloaliphatic epoxies, aliphatic epoxies such as aliphatic mono-, di-, and multi-functional epoxy resins, epoxidised oils, and epoxy functional oils. Examples of monofunctional epoxy resins useful herein as flexibilizers are cresyl glycidyl ether, butyl glycidyl ether, and phenyl glycidyl ether. Other epoxy functional materials are also useful in the blends. Examples of epoxy functional oils include epoxidized linseed oil, epoxidized soybean oil, epoxidized castor oil, and vernonia oil. These additional epoxy functional materials are low molecular weight oils and also tend to impart lower viscosities to adhesive formulations incorporating the compositions of the present invention.

The aromatic epoxy resin/epoxidized polydiene rubber compositions may be combined with epoxidized aliphatic resins, including cycloaliphatic resins, to achieve advantages in thermo-oxidative stability and weatherability. Generally, suitable epoxy resins include a broad range of liquid or solid resins characterized by the presence of, on average, at least one 1,2-epoxy group (i.e. vicinal epoxy group) per molecule. Examples of suitable epoxy resins include the polyglycidyl ethers of both polyhydric alcohols and polyhydric phenols; polyglycidyl amines, polyglycidyl amides, polyglycidyl imides, polyglycidyl hydantoins, polyglycidyl thioethers, epoxidized fatty acids or drying oils, epoxidized polyolefins, epoxidized diunsaturated acid esters, epoxidized unsaturated polyesters, epoxy novolacs, and copolymers and mixtures thereof. These resins may replace part of the epoxy resin in the composition herein and may be present in a weight ratio of epoxy resin to aliphatic resin of 1000:1 to 1:1000. Monofunctional resins tend to impart flexibility to the product. Examples of aliphatic epoxy resins are the HELOXY series resins, HELOXY is a trade mark, (aliphatic mono-, di-, and multi-functional epoxies made by Shell Chemical Company) EPON 871 (diglycidyl aliphatic ester epoxy made by Shell Chemical Company), and UVR-6110 (a difunctional cycloaliphatic epoxy made by Union Carbide Corporation).

The epoxidized rubber modified aromatic epoxy resins can be cured by a variety of means. Suitable epoxy curing agents include anionic initiators, cationic initiators, carboxy functionalized polyesters, polyamides, amido amines, polyamines, melamineformaldehydes, phenol-formaldehydes, urea-formaldehydes, dicyandiamide, polyphenols, polysulfides, ketimines, novolacs, anhydrides, blocked isocyanates, anhydrides, and imidazoles. The composition will generally contain in the range of from 1 to 60, preferably 30 to 60, weight percent curing agent based on the epoxy resin composition.

Anhydride curing agents are commonly used. Such anhydride curing agents may be generally described as any compound containing one or more anhydride functional groups. Most commonly used anhydrides have an aromatic, cycloaliphatic, or aliphatic structure. The curing agent may be selected from the group consisting of phthalic anhydride, substituted phthalic anhydrides, hydrophthalic anhydrides, substituted hydrophthalic anhydrides, succinic anhydride, substituted succinic anhydrides, halogenated anhydrides, multifunctional carboxylic acids, and polycarboxylic acids. Examples include phthalic anhydride (PA), tetrahydrophthalic anhydride (THPA), nadic methyl anhydride (NMA), hexahydrophthalic anhydride (HHPA), pyromellitic dianhydride (PMDA), methyltetrahydro-phthalic anhydride (MTHPA), and dodecenylsuccinic anhydride (DSA). In addition, multifunctional carboxylic acids will provide similar performance. The anhydride is combined with the modified aromatic epoxy resins such that a suitable anhydride/molar ratio is achieved. This ratio should be in the range of from 0.8/1.0 to 1.2/1.0 to achieve suitably complete epoxy network formation. We have found that the ratios which are most useful in achieving improved properties are those that are as

close as possible to 1/1. Typically, the anhydride cures are conducted at elevated temperatures, in the range of from 100 to 170°C for a period of 30 minutes to 6 hours, and are often referred to as "bake cures." The anhydride bake cures can be accelerated by using a curing accelerator. Suitable curing accelerators include amines, e.g. trialkyl amines, phosphines, hydroxyl-containing compounds, imidazoles and Lewis acid compounds. Benzyldimethylamine (BDMA), 2-ethyl-4-methylimidazole (EMI) and $BF_3$ amine complexes have been found to work well in curing the blends of the present invention.

Aliphatic amines such as diethylene triamine (DETA) and triethylene tetraamine (TETA) are also useful for curing the modified aromatic epoxy resins of the present invention. Aromatic amines such as diethyltoluenediamine and metaphenylenediamine (MPDA) are useful for the curing of the compositions of the present invention. Aromatic and aliphatic amines are generally used in an equivalent ratio of in the range of from 0.8/1.0 to 1.2/1.0 but it is preferred that the ratios be as close as possible to 1/1. Polyamides such as EPI-CURE 3140 (EPI-CURE is a trade mark) polyamide curing agent supplied by Shell Chemical Company are also useful in the cure of the modified epoxy compositions as are amido amines and imidazoles. Usually, in the range of from 30 to 130 parts per hundred parts of resin of polyamide is used. There is a wide range of reactivity of the various amines and polyamide curing agents and thus both room temperature and bake cures can be performed by proper choice of the curing agent and its proportion. Sulfonium salts of low nucleophilicity, 2-ethyl-a-methyl-imidazole, benzyldimethylamine (BDMA), lanthanide (III) trifluoromethane sulfonates, lithium perchlorate, may, for example, also be used at catalytic levels (i.e., from 0.1 to 10 parts per hundred parts of resin) to increase the rate of cure of the amine and polyamide curing agents.

The cured blends of the present invention may be used in structural adhesive compositions. Aromatic epoxy resins are known for their utility in such compositions. The blends of the present invention have a higher toughness when used in a structural adhesive than structural adhesives using aromatic epoxy resins alone.

Various types of fillers can be included in an aromatic epoxy resin composition, and a wide variety of fillers can be used. Suitable fillers include calcium carbonate, clays, talcs, zinc oxide, titanium dioxide, silica, iron oxide, mica, alumina, and antimony trioxide. The amount of filler usually is in the range of from 0 to 80% by weight of the formulation depending on the type of filler used and the application for which the formulation is intended. Preferred fillers are silica and titanium dioxide.

In structural composites applications, aromatic epoxy resin compositions include reinforcing fibres. Such reinforcing fibres suitable for use are glass fibres, graphite fibres, carbon fibres, silicon carbide fibres, aramid fibres, boron fibres, alumina fibres.

Other thermosettable resins that may optionally be included in the composition include for example, polyurethane, polyureas, polyamides, brominated epoxies, phenoxy resins, polyesters, polyester-polyether copolymers, bismaleimides, polyimides, and mixtures and copolymers thereof.

The invention composition may also include other additives, such as extenders, plasticizers, pigments, reinforcing agents, flow control agents and flame retardants.

For cycloaliphatic epoxy resin compositions, when the concentration of alkenyl aromatic in the epoxidized polymer is less than 5% by weight, the concentration of epoxide is most suitably in the range of from 3 to 6 meq/g of polymer. When the A block is a block composed primarily of randomly copolymerized isoprene and styrene and the concentration of alkenyl aromatic hydrocarbon monomer is in the range of from 5% to 20% by weight, the concentration of epoxide is most suitably in the range of from 2 to 6 meq/g of polymer. When the B block is a block composed primarily of randomly epoxidized butadiene and styrene and the concentration of monoalkenyl aromatic hydrocarbon is in the range of from 5% to 50% by weight, the concentration of epoxide is also most suitably in the range of from 2 to 6 meq/g of polymer. These polymer compositions are for non-hydrogenated, unsaturated polymers. Hydrogenation of these polymers tends to reduce the compatibility of the epoxidized polymers with cycloaliphatic resins. However, in certain suitably formulated compositions, hydrogenated polymers can be used.

It has been found that by the proper combination of unsaturation, epoxide level, and alkenyl aromatic monomer content, a low viscosity polydiene which possesses suitable compatibility with cycloaliphatic epoxy resins to yield an improved balance of properties can be made. The presence of epoxidation and unsaturation is required in the low viscosity polymers, also to achieve the broadest compatibility of the polymers with cycloaliphatic resins. Therefore, in most cases, the majority of the diene monomers remain unsaturated before epoxidation in the preferred polymers. When alkenyl aromatic monomers are present at concentrations of less than 5% by weight, the preferred epoxide level is in the range of from 3 to 6 meq/g of polymer. When alkenyl aromatic monomers are incorporated at levels of 5% by weight or greater, the preferred epoxide level is in the range of from 2 to 6 meq/g of polymer. The preferred epoxy concentration for all of these polymers is in the range of from 3.5 to 5.0 meq/g. If the epoxy concentration is less than about 3.5, compatible blends of the polymer with the resin are more difficult to obtain. If the epoxy concentration is greater than about 5.0, the performance benefit obtained is not always justified by the increased cost of the polymer. The goal is to achieve a composition which is on the edge of compatibility and incompatibility and each cycloaliphatic epoxy resin formulation may have its own particular epoxidized polydiene polymer that works best in this regard. The epoxy level, degree of unsaturation, and styrene content of the preferred polymers of this invention are specified herein

to achieve such a degree of compatibility with cycloaliphatic epoxy resins.

It has been found that hydrogenated versions of these epoxidized polymers, even those which are only partially hydrogenated, are highly incompatible with cycloaliphatic epoxy resins. These polymers can be used to produce excellent toughened cycloaliphatic epoxy resin compositions if another major ingredient is incorporated into the composition at a level of at least 20 percent by weight. It is preferred that no more than about 80 percent by weight of this component be added to the composition because the curing agents such as the cationic photoinitiator, UVR-6974, become insoluble in the formulation. This third component is a vinyl ether. Vinyl ethers are particularly well suited for use in combination with cycloaliphatic epoxy resins because vinyl ethers can also be cured via a cationic cure mechanism which is frequently used to cure cycloaliphatic epoxy resin compositions. In compatibility screening studies of the commercially available vinyl ethers, one vinyl ether stood out as having particularly good compatibility with one of the epoxidized hydrogenated polymers. This vinyl ether was RAPI-CURE CHVE, cyclohexane dimethanol divinyl ether, from ISP, Inc. Judging from the structures of the other commercially available vinyl ethers, it is likely that RAPI-CURE CHVE will also be the most effective for compatibilizing the other epoxidized polymers and cycloaliphatic resins of this invention.

In another embodiment of this invention, a blend of an epoxidized polydiene polymer used as a toughness modifier and a low molecular weight epoxy functional diluent used as a viscosity reducer is employed as a modifier for cycloaliphatic epoxy resins. These diluents include epoxidized oils, such as epoxidized soybean oil and epoxidized castor oil, naturally occurring epoxidized oils, such as vernonia oil, epoxidized olefins, such as vinyl cyclohexene monoxide, and glycidyl ether epoxides such as butyl glycidyl ether, and phenyl glycidyl ether. The appropriate ratio of epoxidized polydiene polymer to epoxidized diluent must be determined for each particular application. However, typically, the weight ratio of epoxidized polymer to epoxidized diluent should be in the range of from 100/1 to about 1/1.

As for aromatic epoxy resins, when cured cycloaliphatic epoxy resin matrices are also typically very brittle and one way to reduce the brittleness is to incorporate a relatively low modulus second phase in the cycloaliphatic epoxy resin matrix. Another way to reduce the brittleness is to incorporate a flexible additive (diluent) molecularly into the covalent resin network. This second approach will reduce brittleness but will also reduce the rigidity of the matrix more than the first approach.

The exact method by which the epoxidized polydiene polymers toughen cycloaliphatic epoxy resins is not known. However, the composition of the epoxidized polydiene polymer will probably determine the mechanism. Polymers based on isoprene and butadiene epoxidized to only about 3 meq/gm have marginal compatibility in cycloaliphatic epoxy resin and so, when cured, they probably toughen by the first approach. When epoxidized at about 6 meq/gm, they become soluble in the cycloaliphatic epoxy resin and so, when cured, they probably toughen by the second approach. When styrene is incorporated into the polymers, the level of epoxidation necessary to obtain at least marginal compatibility drops to about 2 meq/gm. At this level, the epoxidized polymers probably toughen by the first approach. When epoxidized to up to about 5 meq/gm, they become soluble in the cycloaliphatic epoxy resin and probably toughen by the second approach.

The epoxidized rubber modified cycloaliphatic epoxy resins can be cured by a variety of means. Anhydride curing agents are commonly used. Such anhydride curing agents may be generally described as any compound containing one or more anhydride functional groups. Most commonly used anhydrides have an aromatic, cycloaliphatic or aliphatic structure. The curing agent may be selected from the group consisting of phthalic anhydride, substituted phthalic anhydrides, hydrophthalic anhydrides, substituted hydrophthalic anhydrides, succinic anhydride, substituted succinic anhydrides, halogenated anhydrides, multifunctional carboxylic acids, and polycarboxylic acids. Examples include phthalic anhydride (PA), tetrahydrophthalic anhydride (THPA), nadic methyl anhydride (NMA), hexahydrophthalic anhydride (HHPA), pyromellitic dianhydride (PMDA), methyltetrahydrophthalic anhydride (MTHPA), and dodecenylsuccinic anhydride (DSA). In addition, multifunctional carboxylic acids will provide similar performance. The anhydride is combined with the modified cycloaliphatic epoxy resins such that a suitable anhydride/epoxide molar ratio is achieved. This ratio should be in the range of from 0.8/1 to 1.2/1 to achieve suitably complete cycloaliphatic epoxy network formation. Usually, the best properties are found at the highest crosslink density, which occurs at 1/1 anhydride/epoxy molar ratio. Again, typically, the anhydride cures are conducted as baked cures at elevated temperatures, in the range of from 100 to 170°C for a period of 30 minutes to 6 hours. The anhydride bake cures can again be accelerated by using a curing accelerator, and suitable curing accelerators include trialkyl amines, hydroxyl-containing compounds and imidazoles. Benzyldimethylamine (BDMA) and ethylmethylimidazole have been found to work well in curing the blends of the present invention.

Another common method to cure cycloaliphatic epoxide groups is via a catalytic, ring-opening, homopolymerization to generate ether linkages between molecules. Typical catalysts are Lewis acids, such as boron trifluoride, and protic acids, including phosphoric acid and sulfonic acids such as trifluoromethanesulfonic acid. These acids will cure cycloaliphatic epoxy resins very quickly at ambient temperatures. Amine blocked versions of these acids are also useful. Therefore, the resin and catalyst must be used as a two-component product in which the two components are mixed immediately before application and must be applied before the mixture gels. These acids are also available in

the salt form using volatile bases to block the epoxy curing reaction. These blocked catalysts can be mixed with the epoxy resin, since no reaction occurs at ambient temperatures, giving a one-component product. After application, the formulation is baked, releasing the blocking agent to regenerate the acid which initiates cure of the epoxide groups. Another type of blocked catalytic curing agent, which is commercially available from Union Carbide as CYRACURE UVI-6974, is an aryl sulfonium salt which, when exposed to ultraviolet radiation, generates a cation which can initiate cure of the epoxide groups. This cationic photoinitiator can be blended with the cycloaliphatic epoxy resin in a one-component product which, after application, can be exposed to UV radiation to initiate cure.

The blends of the present invention may be used in any of the applications in which cycloaliphatic epoxy resins are presently used. Typical applications are structural adhesives, coatings, composites and electrical encapsulants. The compositions of the present invention are useful in adhesives (including contact adhesives, laminating adhesives, assembly adhesives, and structural adhesives), in sealants, potting compounds, coatings such as topcoats for automotives, inks (as replacements for resins such as rosin, hydrocarbon and alkyds, as modifiers for cationic curing U.V. screen inks, litho and flexo inks), and moulded thermoset parts. The blends of the present invention should be more flexible, have higher toughness and have better thermal shock resistance when used in a structural adhesive, coating, composite or encapsulant than products using cycloaliphatic epoxy resins alone.

A wide variety of fillers can be used in such formulations within the present invention. Suitable fillers include calcium carbonate, clays, talcs, zinc oxide, and titanium dioxide silica. The amount of filler usually is in the range of from 0 to 65% by weight of the formulation depending on the type of filler used and the application for which the formulation is intended. Preferred fillers are silica and titanium dioxide.

Stabilizers known in the art may also be incorporated into the composition. These may be for protection during the life of the article against, for example, oxygen, ozone and ultra-violet radiation. These may also be for stabilization against thermo-oxidative degradation during elevated temperature processing. Antioxidants which interfere with the curing reaction should be avoided.

Molecular weights of linear polymers or unassembled linear segments of polymers such as mono-, di-, triblock polymers, arms of star polymers before coupling, etc. are conveniently measured by Gel Permeation Chromatography (GPC), where the GPC system has been appropriately calibrated. For polymers of the type described herein, the appropriate standard is a narrow molecular weight distribution polystyrene standard. For anionically polymerized linear polymers, the polymer is essentially monodisperse and it is both convenient and adequately descriptive to report the "peak" molecular weight of the narrow molecular weight distribution observed. The peak molecular weight is usually the molecular weight of the main species shown on the chromatograph. For materials to be used in the columns of the GPC, styrene-divinyl benzene gels or silica gels are commonly used and are excellent materials. Tetrahydrofuran is an excellent solvent for polymers of the type described herein. Ultraviolet or refractive index detectors may be used.

Measurement of the true molecular weight of a coupled star polymer is not as straightforward or as easy to make using GPC. This is because the star shaped molecules do not separate and elute through the packed GPC columns in the same manner as do the linear polymers used for the calibration. Hence, the time of arrival at an ultraviolet or refractive index detector is not a good indicator of the molecular weight. A good method to use for a star polymer is to measure the weight average molecular weight by light scattering techniques. The sample is dissolved in a suitable solvent at a concentration less than 1.0 gram of sample per 100 millilitres of solvent and filtered using a syringe and porous membrane filters of less than 0.5 microns pore size directly into the light scattering cell. The light scattering measurements are performed as a function of scattering angle, polymer concentration and polymer size using standard procedures. The differential refractive index (DRI) of the sample is measured at the same wavelength and in the same solvent used for the light scattering. The following references give further details:

1. Modern Size-Exclusion Liquid Chromatography, M. W. Yau, J. J. Kirkland, D. D. Bly, John Wiley and Sons, New York, New York, 1979.
2. Light Scattering From Polymer Solutions, M. B. Huglin, ed., Academic Press, New York, New York, 1972.
3. W. K. Kai and A. J. Havlik, Applied Optics, 12, 541 (1973).
4. M. L. McConnell, American Laboratory, 63, May, 1978.

If desired, these block copolymers can be partially hydrogenated. Hydrogenation may be effected selectively as disclosed in U.S. Patent Reissue Specification No. 27,145. The hydrogenation of these polymers and copolymers may be carried out by a variety of well established processes including hydrogenation in the presence of such catalysts as Raney Nickel, nobel metals such as platinum and the like, soluble transition metal catalysts and titanium catalysts as in U.S. Patent Specification No. 5,039,755. The polymers may have different diene blocks and these diene blocks may be selectively hydrogenated as described in US-A-5,229,464.

The toughened aromatic epoxy resin compositions of the present invention may be used in a broad variety of applications. They are useful in adhesives, including contact adhesives, laminating adhesives, and assembly adhesives, but they have special utility in structural adhesives where they may be combined with a broad range of curing

agents to form excellent products which adhere to metals, plastic, wood, glass, and other substrates. They also have special utility in coatings (especially primers, topcoats for automotives, epoxy primers for metal, polyester coil coatings, and alkyd maintenance coatings) where they may be combined with pigments and curing agents to form excellent products. Other applications for these compositions include electrical applications such as castings, encapsulants, potting compounds, solder masking compounds, and laminates and construction applications such as flooring, civil engineering, concrete repair and consolidation, secondary containment of tankage, grouts, sealants, polymer concrete, structural composites, and tooling.

The toughened cycloaliphatic epoxy resin compositions of this invention may also be used in a variety of applications. They have special utility in structural adhesives and coatings where they may be combined with anhydride curing agents or catalytic curing agents to form excellent, impact resistant products. They have special utility in coatings, where they may be combined with a cationic photoinitiator and, after application to a substrate, can be cured by exposure to UV radiation to form excellent, flexible products. Other applications for these compositions include electrical castings, encapsulants, potting compounds, laminates, and construction adhesives.

The epoxidised polymers of the invention in addition to finding use in epoxy resin blends, may also be used in pressure sensitive adhesives, films (such as those requiring heat and solvent resistance), moulded and extruded thermoplastic and thermoset parts (for example, thermoplastic injection molded polyurethane rollers or reaction injection molded thermoset auto bumper, facie, and cast urethane parts, in the modification of engineering plastics (such as polycarbonate and polyphenylene ether), in printing plates, and in the modification of asphalt.

The following Examples illustrate the present invention. In the results given where values are given in psi units, these are equivalent to values given in kPa if multiplied by a factor of 6.8948. Similarly the values for psi/in$^2$ are equivalent to KPa/mm$^2$ if multiplied by a factor of 0.0106869. Where values are given in poise, these are equivalent to values given in Pa.s if divided by a factor of 10.

<u>EXAMPLES 1 to 17</u>

Several performance properties of the cured modified epoxy resin compositions of the present invention are important. The tensile properties such as strength, elongation, and Young's modulus are measured according to ASTM D-638. The flexural properties such as flexural modulus, stress and strain at failure are measured according to ASTM D-790. The tensile fracture toughness as characterized by the stress intensity factor ($K_{IC}$) for crack propagation is measured according to ASTM E-399-83. Using the value of $K_{IC}$ so measured, the fracture energy ($G_{IC}$) was calculated for the plane strain conditions employed. The adhesive properties such as lap shear stress are measured according to ASTM D-1002. The glass transition temperature ($T_g$) is measured using torsional bar dynamic mechanical analysis.

Table I below describes the composition of the epoxidized polydiene polymers used in the following examples which describe experiments performed with aromatic epoxy resins.

Table I

Composition of Epoxidized Polymers

| Identification | Base Polymer Architecture | Molecular Weights (in thousands) | Styrene Content (%) | Epoxy Level (meq/g) | Hydrogenatied (Y/N)* |
|---|---|---|---|---|---|
| A | I-B | 0.88-4.08 | 0 | 5.2 | N |
| B | I-B | 0.88-4.08 | 0 | 4.3 | N |
| C | I-B | 0.88-4.08 | 0 | 3.6 | N |
| D | I/S-B-I/S | 1.18/0.68-3.82-0.68/0.39 | 16 | 2.2 | N |
| E | I/S-B-I/S | 1.18/0.68-3.82-0.68/0.39 | 16 | 3.4 | N |
| F | I/S-B | 1.18/0.68-3.82 | 12 | 4.4 | N |
| G | I/S-B | 1.18/0.68-3.82 | 12 | 4.9 | N |
| H | I-S/B-I | 1.0-2.5/1.5-1.0 | 39 | 2.2 | N |
| I | $(I-B)_4$ | $(0.9-4.5)_4$ | 0 | 0.7 | N |
| II | I-S/B-I | 1.0-2.5/1.5-1.0 | 39 | 1.2 | Y |
| III | I/S-B-I/S | 1.18/0.68-3.82-0.68/0.39 | 16 | 0.8 | N |

*Y = Yes, N = No

In the base polymer architecture column of Table I, B represents poly(1,3-butadiene) blocks, I represents polyisoprene blocks, and S represents polystyrene blocks, respectively. All blocks are separated by a dash. Random copolymer blocks are represented by I/S and S/B for randomly copolymerized isoprene and styrene and randomly copolymerized styrene and butadiene, respectively. A polar cosolvent, diethyl ether, was used as part of the polymerization solvent system, cyclohexane, during the synthesis of the I/S and B/S blocks to encourage randomization. Star or radial polymers having n arms are represented in parentheses, $( )_n$. Polymers A to H are of the invention; polymers I, II and III are comparison examples.

During the anionic synthesis of the base polymers A, B, C, and I, the isoprene monomer was polymerized in cyclohexane solvent alone (no polar cosolvent present) to encourage formation of primarily 1,4-polyisoprene blocks. Enough diethyl ether was added to give about 10% by weight diethyl ether in the final solution. The presence of the polar cosolvent caused the butadiene to polymerize about equally in both the 1,4 and 1,2 microstructures. All of the blocks in polymers D, E, F, G, H, II, and III were polymerized in the presence of about 6 to 10% by weight diethyl ether cosolvent and the polyisoprene thus has significant amounts of both the 1,4 and 3,4 microstructures and the polybutadiene has both the 1,2 and 1,4 microstructures. Polymer II was partially hydrogenated prior to epoxidation. It had about 1.7 meq/g of polymer of residual unsaturation which was almost entirely in the polyisoprene blocks.

For all of the polymers, the epoxidation was carried out in the polymerization solvent using peracetic acid solution from FMC Corp. The method is generally described in U.S. Patent Specification No. 5,229,464. The polymers were washed and recovered by vacuum drying.

In addition to the 5.2 meq/g of epoxide on Polymer A, it also contained about 1 meq/g of derivatized epoxide. According to $C^{13}$ NMR analysis, the derivative was primarily the hydrolysis product of the epoxide, consisting of secondary and tertiary alcohol groups. Since 1 meq of epoxide can generate two meq of OH, there was about 2 meq/g of these hydroxyls in Polymer A. The presence of these hydroxyl groups will make hydrogenated versions of these polymers more compatible with the epoxy resins. A very small amount of the acetic ester-alcohol derivative was also observed. Polymer B had a smaller amount of derivatized epoxide and Polymer C had no detectable derivatized epoxide functionality.

Epoxy resins used herein include the commercially-available epoxy resin EPON Resin 828, a reaction product of epichlorohydrin and 2,2-bis(4-hydroxyphenylpropane) (bisphenol-A) having a molecular weight of about 400, an epoxide equivalent (ASTM D-1652) of about 185-192, and an n value of about 0.13, and EPON 826, a reaction product of epichlorohydrin and bisphenol-A with an n value of about 0.08.

Aliphatic epoxy resins used herein as flexibilizers are the HELOXY series resins (aliphatic mono-, di-, and multi-functional epoxies made by Shell Chemical Company) EPON 871 (diglycidyl aliphatic ester epoxy made by Shell Chemical Company), and UVR-6110 (a difunctional cycloaliphatic epoxy made by Union Carbide Corporation).

Curing agents used herein include phthalic anhydride (PA), tetrahydrophthalic anhydride (THPA), nadic methyl anhydride (NMA), hexahydrophthalic anhydride (HHPA), pyromellitic dianhydride (PMDA), methyltetrahydro-phthalic anhydride (MTHPA), and dodecenylsuccinic anhydride (DSA). Curing accelerators used herein include trialkyl amines, hydroxyl-containing compounds and imidazoles. Benzyldimethylamine (BDMA), 2-ethyl-4-methylimidazole (EMI) and $BF_3$ amine complexes have been used. Aliphatic amines such as diethylene triamine (DETA) and triethylene tetraamine (TETA) have been used for curing the modified epoxy resins. Aromatic amines such as diethyltoluenediamine and metaphenylenediamine (MPDA) have also been used. Polyamides such as EPI-CURE 3140 polyamide curing agent supplied by Shell Chemical Company are also useful in the cure of the modified epoxy compositions. Benzyldimethylamine (BDMA) has been used.

Example 1

The compatibility of the epoxidized polymers in blends with EPON 826 epoxy resin was evaluated by measurement of their cloud points. The cloud point is defined as that temperature at which the blend becomes turbid. The turbidity of the blend indicates formation of a phase separated morphology with particles of sufficient size to scatter light. Epoxidized polymer/epoxy resins blends with excessively high (>150°C) cloud points are not useful for the present invention because this prohibits mixing of the epoxidized polymer and epoxy resin.

In this example blends of epoxidized polymers having the structure I-B or $(I\text{-}B)_n$ with EPON 826 resin are demonstrated and compared. Table II lists the cloud points for blends at various epoxidized polymer concentrations.

Table II

| Cloud Points of Blends of Epoxidized Polymer with EPON 826 at Various Epoxidized Polymer Levels | | | | | |
|---|---|---|---|---|---|
| Epoxidised Polymer | Cloud Point (°C) | | | | |
| | @ 10% Polymer | @ 20% Polymer | @ 30% Polymer | @ 40% Polymer | @ 50% Polymer |
| A | 46 | 37 | 28 | <22 | <22 |
| B | 82 | 74 | 62 | 49 | 34 |
| C | 123 | 118 | 108 | 102 | 88 |
| I | >150 | >150 | -- | -- | -- |

The cloud point of epoxidized polymers A, B, and C are well below 150°C at concentrations up to 50% polymer. Thus, epoxidized polymers A, B, and C are suitable for use in the present invention. The comparative polymer I (which has a similar structure) is unable to be mixed with EPON 826 resin because of its excessively high cloud point. Comparative polymer I corresponds directly to polymer 103 (0.7 meq/g of epoxy) of US-A-5,332,783. This demonstrates that polymers of the structure I-B or $(I\text{-}B)_n$ require epoxy levels greater than 0.7 meq/g to be useful.

Example 2

The cloud point of blends of epoxidized polymers having the structure I/S-B-I/S and I/S-B and EPON 826 epoxy resin were measured as in Example I. Table III lists the cloud points for blends of various epoxidized polymer levels.

Table III

| Cloud Points of Blends of Epoxidized Polymer with EPON 826 at Various Epoxidized Polymer Levels | | | | | |
|---|---|---|---|---|---|
| Epoxidized Polymer | Cloud Point (°C) | | | | |
| | @ 10% Polymer | @ 20% Polymer | @ 30% Polymer | @ 40% Polymer | @ 50% Polymer |
| D | 114 | -- | -- | -- | -- |
| E | 102 | 106 | -- | -- | -- |
| F | 66 | 60 | 52 | 43 | 36 |
| G | 62 | 57 | 46 | 37 | 25 |
| III | >150 | >150 | -- | -- | -- |

The cloud point of epoxidized polymers D to G are well below 150°C at concentrations up to 50%. These polymers contain at least 12% styrene by weight. At these concentrations, polymer D is suitable for use in the present invention at an epoxy level of 2.2 meq/g. Likewise, polymers E, F, and G, all at higher epoxy levels, are also suitable for use in the present invention. However, comparative polymer III (which has a similar structure) with 16% by weight styrene and an epoxy level 0.8 meq/g of polymer has an excessively high cloud point and cannot be mixed with EPON 826 resin.

Example 3

The cloud points of blends of epoxidized polymers having the structure I-S/B-I and EPON 826 resin were measured as in Example 1. Table IV lists the cloud points for blends at various epoxidized polymer concentrations.

Table IV

| Cloud Points of Blends of Epoxidized Polymer with EPON 826 at Various Epoxidized Polymer Levels. | | | |
|---|---|---|---|
| Epoxidized Polymer | Cloud Point (°C) | | |
| | @ 10% Polymer | @ 20% Polymer | @ 30% Polymer |
| H | 72 | -- | 70 |
| II | >150 | >150 | -- |

The cloud point of the blend of epoxidized polymer H and EPON 826 resin is well below 150°C and so is suitable for use in the present invention. Polymer H has an epoxy level of 2.2 meq/g and is not hydrogenated. The cloud point of the blend containing comparative polymer II (which has a similar structure) is excessively high and polymer II cannot be mixed with EPON 826 resin and so is unsuitable for use in the present invention. Comparative polymer II has an epoxy level of 1.2 meq/g and the diene monomer units have been hydrogenated. Comparative polymer II corresponds directly to polymer 204 of US-A-5,332,783.

Example 4

The compatibility of epoxidized polymer C, having the structure I-B, with a mixture of EPON 828 resin, a diglycidyl ether of bisphenol-A, and UVR-6110, a cycloaliphatic epoxy resin is described. Table V lists the cloud points for the blends having 10% and 20% epoxidized polymer.

Table V

| Cloud Points of Ternary Blends of Epoxidized Polymer C, EPON 828, and UVR-6110 | | | |
|---|---|---|---|
| Blend Composition, Wt% | | | Cloud Point (°C) |
| Polymer C | EPON 828 | UVR-6110 | |
| 10 | 90 | 0 | 126 |
| 10 | 81 | 9 | 117 |
| 10 | 72 | 18 | 106 |
| 10 | 63 | 27 | 94 |
| 10 | 54 | 36 | 82 |
| 10 | 45 | 45 | 69 |
| 10 | 36 | 54 | 56 |
| 10 | 27 | 63 | 41 |
| 10 | 18 | 72 | <23 |
| 10 | 9 | 81 | <23 |
| 20 | 80 | 0 | 123 |
| 20 | 72 | 8 | 112 |
| 20 | 64 | 16 | 102 |
| 20 | 56 | 24 | 91 |
| 20 | 48 | 32 | 80 |
| 20 | 40 | 40 | 67 |
| 20 | 32 | 48 | 52 |
| 20 | 24 | 56 | 37 |
| 20 | 16 | 64 | <23 |
| 20 | 8 | 72 | <23 |

The cloud points of the binary blends of EPON 828 resin and UVR-6110 are below room temperature for all compositions. The cloud points of the ternary blends listed in Table V are all well below 150°C. Thus, epoxidized polymers blended with aromatic and cycloaliphatic epoxy resins are shown to be compatible.

Example 5

The compatibility of epoxidized polymer F, having the structure I/S-B, with a mixture of EPON 828 resin, a diglycidyl ether of bisphenol-A, and UVR-6110, a cycloaliphatic epoxy resin, is described. Table VI lists the cloud points for the blends having 10% and 20% epoxidized polymer.

Table VI

| Cloud Points of Ternary Blends of Epoxidized Polymer F, EPON 828, and UVR-6110 | | | |
|---|---|---|---|
| Blend Composition, Wt% | | | Cloud Point (°C) |
| Polymer F | EPON 828 | UVR-6110 | |
| 10 | 90 | 0 | 70 |
| 10 | 81 | 9 | 63 |
| 10 | 72 | 18 | 52 |
| 10 | 63 | 27 | 41 |
| 10 | 54 | 36 | 30 |
| 10 | 45 | 45 | 25 |
| 10 | 36 | 54 | <23 |
| 10 | 27 | 63 | <23 |
| 10 | 18 | 72 | <23 |
| 10 | 9 | 81 | <23 |
| 20 | 80 | 0 | 60 |
| 20 | 72 | 8 | 56 |
| 20 | 64 | 16 | 45 |
| 20 | 56 | 24 | 35 |
| 20 | 48 | 32 | 26 |
| 20 | 40 | 40 | <23 |
| 20 | 32 | 48 | <23 |
| 20 | 24 | 56 | <23 |
| 20 | 16 | 64 | <23 |
| 20 | 8 | 72 | <23 |

The cloud points of the ternary blends listed in Table VI are all well below 150°C. Thus, epoxidized polymers blended with aromatic and cycloaliphatic epoxy resins are again shown to be compatible.

Example 6

A controlled amount of the epoxidized polymer having the structure I-B (polymer A or B) or $(I\text{-}B)_n$ (polymer I) was added to EPON 826 resin. In this example and the ones following, the amount of epoxidized polymer is expressed as the percentage by weight of the mass of epoxy resin plus epoxidized polymer. The total epoxy content of the blend was calculated from knowledge of the epoxy level of the epoxidized polymer and the epoxy equivalent weight of EPON 826 resin (182 g/mole of epoxy functionality). A stoichiometric amount of MTHPA, or a mass such that there was present one anhydride group for every epoxy group, was measured into a separate container. Both masses were heated to 100°C and then mixed together. 1 part of EMI per hundred parts of the epoxidized polymer plus EPON 826 resin was

added to accelerate the curing reaction. After thorough mixing, the mixture was poured into a glass mould at 120°C. The blend containing polymer A was optically clear at this point. The blend containing comparative polymer I was cloudy at this point. The mould was held at 120°C for 2 hours and then heated to 150°C and held at this temperature for 4 hours. The moulds were then cooled to room temperature, the rubber modified epoxy resin plaques removed, and their physical properties tested. The mechanical properties of the resultant rubber modified epoxy resins are listed in Table VII.

In Table VII the control is an unmodified EPON 826 resin. Cured resins containing epoxidized polymer A at the 10% level experienced a 261% increase in fracture energy ($G_{IC}$) while maintaining high tensile strengths and elongations and good flexural properties. Cured resins containing epoxidized polymer B experienced increases of 254% and 561% in fracture energy with 10% and 20% epoxidized polymer, respectively. Cured resins containing the comparative polymer I at the 10% level experienced a 22% increase in fracture energy while suffering loss of tensile strength and elongation and flexural strength and strain. These results demonstrate that polymers of the invention having structures of I-B with high epoxy content and thus improved compatibility are effective in achieving a superior balance of properties in epoxy resins cured with anhydrides. When poor compatibility of epoxidized polymer and epoxy resin results, as in the case of comparative Polymer I and EPON 826 resin, only an insignificant increase in toughness is observed along with a significant degradation of tensile and flexural properties.

Table VII

Mechanical Properties of Modified EPON 826

| modifier and level | tensile properties | | | tensile fracture toughness | | flexural properties | | | |
|---|---|---|---|---|---|---|---|---|---|
| | strength (psi) | elongation (%) | Young's modulus (psi) | $K_{IC}$ (psi in$^{½}$) | $G_{IC}$ (J/m$^2$) | modulus (psi) | stress at failure (psi) | strain at failure (psi) | $T_g$ (°C) |
| Control | 11,850 | 6.6 | 434,000 | 452 | 74 | 483,000 | 19,300* | 5.0* | 156 |
| 10% A | 11,730 | 5.0 | 442,000 | 875 | 267 | 461,000 | 18,400* | 5.0* | 150 |
| 10% B | 11,440 | 4.5 | 423,900 | 849 | 262 | 461,000 | 18,800 | 5.7 | 148 |
| 20% B | 7,220 | 2.3 | 370,100 | 1096 | 489 | 399,000 | 15,300 | 4.7 | 140 |
| 10% I | 8,500 | 2.7 | 420,000 | 496 | 90 | 420,000 | 13,100 | 3.4 | 154 |

* Samples did not fail. Stress at 5% strain is reported.

Example 7

A controlled amount of the epoxidized polymers having the structure I/S-B-I/S (polymers D and E) or I/S-B (polymers F and G) was added to EPON 826 resin according to the protocol specified in Example 6. After thorough mixing of the epoxidized polymer, EPON 826 resin, MTHPA, and EMI, the blend was poured into a mould at 120°C. The blends containing epoxidized polymers D, E, F, and G were optically clear at this point. Curing was continued as in Example 6. The mechanical properties of the resultant rubber modified epoxy resins are listed in Table VIII.

Cured resins containing epoxidized polymers D, E, F, and G at the 10% level experienced an increase in fracture energy ($G_{IC}$) ranging from 212% to 253% while maintaining high tensile strengths and elongations and good flexural properties. The cured resin containing epoxidized polymer G at the 20% level experienced a 435% increase in tensile fracture toughness while maintaining high tensile strengths and elongations and good flexural properties. These results demonstrate that polymers of the invention having structures of I/S-B-I/S or I/S-B are effective in achieving a superior balance of properties in epoxy resins cured with anhydrides.

TABLE VIII

Mechanical Properties of Modified EPON 826

| modifier and level | tensile properties | | | tensile fracture toughness | | flexural properties | | | |
|---|---|---|---|---|---|---|---|---|---|
| | strength (psi) | elongation (%) | Young's modulus (psi) | $K_{IC}$ (psi $in^{1/2}$) | $G_{IC}$ ($J/m^2$) | modulus (psi) | stress at failure (psi) | strain at failure (psi) | $T_g$ (°C) |
| Control | 11,850 | 6.65 | 434,000 | 452 | 74 | 483,000 | 19,300* | 5.0* | 156 |
| 10% D | 9,625 | 3.22 | 401,000 | 817 | 257 | 448,000 | 17,700 | 5.4 | 150 |
| 10% E | 10,430 | 3.17 | 446,000 | 829 | 238 | 474,000 | 16,600 | 3.9 | 140 |
| 20% F | 11,620 | 4.7 | 438,000 | 861 | 261 | 471,000 | 18,800 | 5.4 | 147 |
| 10% G | 11,590 | 4.1 | 444,000 | 816 | 231 | 478,000 | 19,100 | 5.0 | 145 |
| 20% G | 9,830 | 4.0 | 398,000 | 1,022 | 396 | 420,000 | 17,200 | 5.7 | 136 |

*Samples did not fail. Stress at 5% strain is reported.

Example 8

A controlled amount of the epoxidized polymer having the structure I-S/B-I (polymer H) was added to EPON 826 resin according to the protocol specified in Example 6. After thorough mixing of the epoxidized polymer, EPON 826 resin, MTHPA, and EMI, the blend was poured into a mould at 120°C. The blends containing epoxidized polymer H were optically clear at this point. Curing was continued as in Example 6. The mechanical properties of the resultant rubber modified epoxy resins are listed in Table IX.

Cured resins containing epoxidized polymer H at the 10% and 20% level experienced increases in tensile fracture toughness ($K_{IC}$) of 108% and 144% respectively while maintaining good flexural properties. These results demonstrate that polymers of the invention having structures of I-B/S-I are effective in achieving a superior balance of properties in epoxy resins cured using anhydrides.

TABLE IX

| Mechanical Properties of Modified EPON 826 | | | | | |
|---|---|---|---|---|---|
| modifier and level | tensile fracture toughness | flexural properties | | | $T_g$ (°C) |
| | $K_{IC}$ (psi in$^{1/2}$) | modulus (psi) | stress at failure (psi) | strain at failure (%) | |
| Control | 452 | 480,000 | 20,400 | 6.3 | 156 |
| 10% H | 939 | 458,000 | 18,600 | 6.2 | 148 |
| 20% H | 1,104 | 406,000 | 15,600 | 4.8 | 146 |

Example 9

A controlled amount of epoxidized polymer E was added to EPON 826 resin as specified in Example 6. Blends of anhydride curing agents MTHPA and DSA were made containing 10% and 20% DSA. A stoichiometric amount of the DSA/MTHPA blend, or a mass such that there was present one anhydride group for every epoxy group, was measured into a separate container. The epoxidized polymer/epoxy resin/anhydride curing agent/accelerator blend was made and mixed according to the protocol specified in Example 6. Upon pouring into the mould at 120°C, the blends were optically clear. Curing was continued as in Example 6. The mechanical properties of the resultant rubber modified epoxy resins are listed in Table X.

Incorporation of the epoxidized polymers leads to increases in fracture energy ($G_{IC}$) for the samples with 10% and 20% DSA curing agent levels of 408% and 137%, respectively, while maintaining high tensile strengths and elongations and good flexural properties. These results demonstrate that the epoxidized diene polymers are effective at achieving a superior balance of properties in curing systems containing mixtures of anhydrides.

TABLE X

Mechanical Properties of Modified EPON 826

| modifier and level | tensile properties | | | tensile fracture troughness | | flexural properties | | | |
|---|---|---|---|---|---|---|---|---|---|
| | strength (psi) | elongation (%) | Young's modulus (psi) | $K_{IC}$ (psi in$^{½}$) | $G_{IC}$ (M/m$^2$) | modulus (psi) | stress at failure (psi) | strain at failure (%) | $T_g$ (°C) |
| Control 90MTHPA/10DSA | 10,940 | 6.7 | 436,000 | 467 | 79 | 468,000 | 19,000* | 5.0* | 136 |
| 10% E 90MTHPA/10DSA | 9,040 | 3.5 | 377,000 | 990 | 401 | 421,000 | 16,200 | 4.8 | 112 |
| Control 80MTHPA/10DSA | 9,840 | 7.7 | 393,000 | 464 | 86 | 444,000 | 17,700* | 5.0* | 120 |
| 20% E 90MTHPA/10DSA | 9,360 | 2.9 | 422,000 | 747 | 204 | 449,000 | 17,300 | 4.7 | 130 |

*Samples did not fail. Stress at 5% strain is reported.

Example 10

A controlled amount of epoxidized polymer F having the structure I/S-B or epoxidized polymer C having the structure I-B was added to EPON 828. 33 parts of EPI-CURE 3140 (a polyamide curing agent) per hundred parts of EPON 828 resin plus epoxidized polymer were added to the mixture and stirred by hand. A small amount (less than 1 part per hundred parts of EPON 828 resin plus epoxidized polymer) of PC-1344/monofunctional glycidyl epoxy solution was added to aid in defoaming the mixture. The blend was degassed in vacuum and centrifuged. The blend was poured into a glass mould and held at room temperature at least 7 days before testing. The mechanical properties of the resultant rubber modified epoxy resins are listed in Table XI.

Incorporation of epoxidized polymers C and F at the 10% level leads to increases in fracture energy ($G_{IC}$) of 78% and 94%, respectively, while maintaining good tensile and flexural properties. These results demonstrate that the epoxidized polymers are effective at achieving a superior balance of properties in epoxy resins cured with polyamides.

TABLE XI

Mechanical Properties of Modified EPON 828

| modifier and level | tensile properties | | | tensile fracture troughness | | flexural properties | | | $T_g$ (°C) |
|---|---|---|---|---|---|---|---|---|---|
| | strength (psi) | elongation (%) | Young's modulus (psi) | $K_{IC}$ (psi in$^{½}$) | $G_{IC}$ (M/m$^2$) | modulus (psi) | stress at failure (psi) | strain at failure (%) | |
| Control | 4,000 | 13.9 | 341,000 | 530 | 130 | 366,000 | 11,100* | 5.0* | 53 |
| 10% C | 5,260 | 5.5 | 332,000 | 708 | 231 | 335,000 | 9,800 | 4.9 | 59 |
| 10% F | 3,820 | 14.5 | 309,000 | 714 | 252 | 322,000 | 10,000* | 5.0* | 59 |

*Samples did not fail. Stress at 5% strain is reported.

Example 11

A controlled amount of epoxidized polymer G having the structure I/S-B was added to EPON 828 resin. An amount of diethyl toluene diamine was added so that there was one amine hydrogen for every epoxy group. The blend was heated to 100°C and mixed thoroughly. The blend was then poured into a glass mould at 120°C. The mould was held at 120°C for 2 hours and then heated to 150°C and held at this temperature for 4 hours. The moulds were then cooled to room temperature, the rubber modified epoxy resin plaques removed, and their physical properties tested. The mechanical properties of the resultant rubber modified epoxy resins are listed in Table XII.

Incorporation of the epoxidized polymer at the 10% level led to an increase in fracture energy ($G_{IC}$) of 50% while maintaining good tensile and flexural properties. Incorporation of 20% polymer G led to further increases in toughness. These results demonstrate that the epoxidized polymer is effective at achieving a superior balance of properties in epoxy resins cured with amines.

Example 12

A blend was prepared having equal parts by weight of EPON 828 resin and UVR-6110. A controlled amount of epoxidized polymer C was added. The modified, blended epoxidized resin was cured using MTHPA and EMI as in Example 6. The mechanical properties of the resultant rubber modified epoxy resins are listed in Table XIII. The results demonstrate that incorporation of the epoxidized polymers lead to significant increases in toughness of blended aromatic and cycloaliphatic epoxy resins.

TABLE XII

Mechanical Properties of Modified EPON 828

| modifier and level | tensile properties | | | tensile fracture troughness | | flexural properties | | | $T_g$ (°C) |
|---|---|---|---|---|---|---|---|---|---|
| | strength (psi) | elongation (%) | Young's modulus (psi) | $K_{IC}$ (psi in$^{1/2}$) | $G_{IC}$ (M/m$^2$) | modulus (psi) | stress at failure (psi) | strain at failure (%) | |
| Control | 9,560 | 4.1 | 364,600 | 610 | 161 | 400,000 | 16,000* | 5.0* | 177 |
| 10% G | 9,670 | 6.1 | 322,300 | 716 | 242 | 345,000 | 12,300 | 4.4 | 177 |
| 20% G | 6,514 | 3.4 | 279,400 | 1026 | 553 | 278,000 | 10,700* | 5.0* | - |

*Samples did not fail. Stress at 5% strain is reported.

TABLE XIII

Mechanical Properties of Modified EPON 828

| | tensile fracture toughness | flexural properties | | | |
|---|---|---|---|---|---|
| modifier and level | $K_{IC}$ (psi in$^{1/2}$) | modulus (psi) | stress at failure (psi) | strain at failure (%) | $T_g$ (°C) |
| Control | 430 | 490,000 | 19,900* | 5.0* | 186 |
| 10% C | 627 | 434,000 | 16,200 | 4.4 | 176 |

*Samples did not fail. Stress at 5% strain is reported.

Example 13

The procedure of Example 11 was repeated with the exception that 1 part of EMI per 100 parts of the epoxidized polymer plus epoxy resin was added to catalyze the cure reaction of epoxidized polymer and epoxy resin. The mechanical properties of the resultant rubber modified epoxy resins are listed in Table XIV. These results demonstrate that incorporation of the epoxidized polymers leads to a significant increase in toughness in accelerated amine cured epoxy resins.

TABLE XIV

| Mechanical Properties of Modified EPON 828 | | | | |
|---|---|---|---|---|
| | tensile fracture toughness | flexural properties | | |
| modifier and level | $K_{IC}$ (psi $in^{1/2}$) | modulus (psi) | stress at failure (psi) | strain at failure (%) |
| Control | 510 | 511,000 | 20,200* | 5.0* |
| 10% G | 804 | 431,000 | 16,400 | 4.9 |

*Samples did not fail. Stress at 5% strain is reported.

Example 14

A controlled amount of epoxidized polymer G was added to a blend of 75% by weight EPON 828 resin and 25% by weight cresyl glycidyl ether, a monofunctional epoxy resin. The average weight per epoxy was calculated. The blend was cured using MTHPA/EMI as in Example 6.

Cured plaques were obtained that showed no signs of surface or bulk segregation of the rubber. The plaques were rigid and the rubber was judged to be phase separated but homogeneously distributed throughout the sample. These results demonstrate that epoxidized polymers are useful rubber modifiers in blends of monofunctional and difunctional epoxy resins.

Example 15

A controlled amount of epoxidized polymer G was added to a blend of 75% by weight EPON 828 resin and 25% by weight trimethylolpropane triglycidyl ether, a trifunctional epoxy resin. The average weight per epoxy was calculated. The blend was cured using MTHPA/EMI as in Example 6.

Cured plaques were obtained that showed no signs of surface or bulk segregation of the rubber. The plaques were rigid and the rubber was judged to be phase separated but homogeneously distributed throughout the sample. These results demonstrate that epoxidized polymers are useful rubber modifiers in blends of multifunctional and difunctional epoxy resins.

Example 16

A controlled amount of epoxidized polymer A having the structure I-B or epoxidized polymer F having the structure I/S-B was added to EPON 828 resin. 33 parts of EPI-CURE 3140 polyamide curing agent per hundred parts of EPON 828 resin plus epoxidized polymer were added to the mixture and stirred by hand. A small amount (less than 1 part per hundred parts of EPON 828 resin plus epoxidized polymer) of PC-1344 defoamer (manufactured by Monsanto) in cresyl glycidyl epoxy solution was added to aid in defoaming the mixture. The blend was degassed in vacuum and centrifuged. This cured epoxy was used to bond two aluminium strips together. The epoxy was cured one day at room temperature followed by one hour at 100°C. The lap shear strength was measured after cure and is listed in Table XV.

TABLE XV

| Lap Shear Strength of Rubber Modified EPON 828 | |
|---|---|
| Modifier and Level | Shear Strength (psi) |
| Control - no modifier | 917 |
| 10% A | 950 |
| 10% F | 1220 |

At 10% levels epoxidized polymers A and F yield increases in shear strength of 4% and 33%, respectively. These results demonstrate that incorporation of epoxidized polymers leads to increased strength of EPON 828 resin adhesives.

Example 17

A blend of 10% epoxidized polymer H having the structure I-S/B-I in EPON 826 resin was made. A comparative blend containing 10% HYCAR 1300x8 (HYCAR is a trade name) carboxy terminated butadiene acrylonitrile copolymer manufactured by B. F. Goodrich in EPON 826 resin was made. The viscosities were measured using a Brookfield viscometer. The results are listed in Table XVI.

TABLE XVI

| Viscosity of Blends of 10% Rubber in EPON 826 | | | |
|---|---|---|---|
| Polymer | Viscosity-Poise | | |
| | @ 50°C | @ 75°C | @ 100°C |
| H | 7.42 | 1.42 | 0.43 |
| HYCAR 1300x8 | 9.82 | 2.02 | 0.80 |

These results show that the blend containing epoxidized polymer H has a lower viscosity than the comparative blend containing HYCAR 1300x8. Thus, epoxidized polymer H possesses the processing advantage of giving blends with epoxy resins having lower viscosities.

Examples 18 to 21

The following examples were carried out using cycloaliphatic epoxy resins. Result values given in mil are equivalent to values in mm if multiplied by a factor of 0.0254.

Example 18

One important application of these epoxidized-rubber modified cycloaliphatic epoxy resin compositions is in coatings, especially coatings crosslinked via a UV initiated cationic cure reaction. The formulation used for the following experiments comprised 78.9% by weight of the cycloaliphatic epoxy resin, CYRACURE UVR-6110, 3,4-epoxycyclohexyl-methyl-3,4-epoxycyclohexane carboxylate from Union Carbide, 20% of the epoxidized rubber, 1% of the cationic photoinitiator, CYRACURE UVI-6974, mixed triarylsulfonium hexafluoroantimonate salts from Union Carbide, and 0.1% of a wetting agent, FLUORAD FC-430, a nonionic fluorochemical surfactant from 3M, which is used to reduce the surface tension of the coating and improve its ability to wet the aluminium substrate onto which it will be coated. The components were mixed manually at about 100°C. The blends were first checked for phase stability by inspecting them visually after they had stood undisturbed in a bottle overnight. If they were phase stable, they were warmed to about 70°C and applied to aluminium substrates with a #40 wire rod at a dry film thickness of about 1 mil (0.02 mm). The coatings were cured by exposure to UV radiation from 1 medium pressure Hg lamp at a line speed of 30 feet per minute (fpm) - 9 metres per minute (mpm). The coatings were then baked for 10 minutes at 120°C to complete the cure.

The films were evaluated for mechanical properties. The appearance of the coatings was judged visually. The pencil hardness (gouge) of the coatings was measured according to the ASTM D3363 method of pushing successively softer pencil leads across the coating until the pencil lead will no longer gouge through the coating. The hardness scale (softest to hardest) is 6B<5B<4B<3B<2B<B<HB<F<H<2H<3H<4H<5H<6H. The methyl ethyl ketone (MEK) resistance of the coatings was measured according to the ASTM D4752 method of rubbing an MEK-moistened cloth across the coating for 200 cycles, or until breakthrough to the aluminium substrate occurred (one cycle equals one forward and one backward stroke). The value given in the table is the number of cycles the coating survived before breakthrough. Adhesion of the coatings was measured with the cross hatch adhesion test, ASTM D3359, Method B. In this test, a lattice pattern is scribed through the coating, pressure sensitive tape is applied and removed, and the amount of coating removed with the tape is rated. The scale ranges from 5 (no adhesion loss) to 0 (greater than 65% adhesion loss). The flexibility of the coatings was measured with the mandrel bend test according to ASTM D522, Method A. In this test, the coated 4-inch wide (0.1 metre), 25 mil (0.6 mm) thick panel is bent around a standard conical mandrel and the percentage of the distance across the panel through which the coating cracks is measured (0% is no cracking, 100% is cracking of the coating completely across the panel). In some cases, flexibility was also judged by the wedge

bend test. In this test, the coating on a 10 mil (0.2 mm) thick, 3 inch (0.08 metre) wide steel panel is bent with a wedge shaped die which varies the severity of the bend across the panel. On one edge, the panel is bent back upon itself. The wedge shaped die progressively reduces the severity of the bend across the panel until, on the other edge of the panel, the bend simulates that of a 0.1 inch (0.002 m) diameter mandrel. The result is given as the percentage of the width of the panel across which the coating cracks. The polymers used to flexibilize the coatings are described in Table XVII. The results of coating evaluations are shown in Table XVIII.

Table XVII

| Composition of Epoxidized Polymers | | | | |
|---|---|---|---|---|
| Identity | Base Polymer Architecture | Molecular Weights (in thousands) | Styrene Content (%) | Epoxy Level (meq/g) |
| J | I-B | 0.88-4.08 | 0 | 2.1 |
| K | I-B | 0.88-4.08 | 0 | 3.6 |
| L | I-B | 0.88-4.08 | 0 | 5.2 |
| M | I/S-B-I/S | 1.18/0.68-3.82-0.68/0.39 | 16 | 0.8 |
| N | I/S-B-I/S | 1.18/0.68-3.82-0.68/0.39 | 16 | 2.2 |
| O | I/S-B-I/S | 1.18/0.68-3.82-0.68/0.39 | 16 | 3.4 |
| P | I-S/B-I | 1.0-2.5/1.5-1.0 | 39 | 2.2 |
| Q | I-S/B | 1.18/0.68-3.82 | 12 | 3.5 |
| R | I/S-B | 1.18/0.68-3.82 | 12 | 4.5 |
| S | I/S-B | 1.18/0.68-3.82 | 12 | 5.5 |
| T | $(I-B)_4$ | $(0.9-4.5)_4$ | 0 | 2.0 |
| U | $(I-B)_4$ | $(0.9-4.5)_4$ | 0 | 3.85 |

In the base polymer architecture column of Table XVII, B represents polybutadiene blocks, I represents polyisoprene blocks, and S represents polystyrene blocks, respectively. Homopolymer blocks are separated by a dash. Random copolymer blocks are represented by I/S and S/B for randomly copolymerized isoprene and styrene and randomly copolymerized styrene and butadiene, respectively. Star or radial polymers having n arms are represented in parentheses, $( )_n$. In all polymers the polybutadiene microstructure is 45% 1,2-addition. Polymers J, M and T are not of the invention.

Table XVIII

Compatibility and Cure of Polymer/Cycloaliphatic Epoxy Blends

| Polymer | Epoxy Content (meq/g) | Compatible | Thickness (mil) | Hardness | MEK Rubs | Cross-hatch Adhesion | Mandrel Bend (%) | Appearance |
|---|---|---|---|---|---|---|---|---|
| J | 2.1 | No | - | - | - | - | - | Bad |
| K | 3.6 | Yes | 1 | HB | >200 | 0 | 69 | Nice |
| L | 5.2 | Yes | 0.6 | H | >200 | 0 | 87 | Nice |
| M | 0.8 | No | - | - | - | - | - | Bad |
| N | 2.2 | Yes | 2.2 | H | >200 | 0 | 100 | Nice |
| O | 3.4 | Yes | 2.1 | H | >200 | 0 | 100 | Nice |
| P | 2.2 | Yes | 0.9 | HB | >200 | 5 | 0 | Nice |
| Q | 3.5 | Yes | 0.4 | HB | >200 | 0 | 6 | Nice |
| R | 4.5 | Yes | 0.7 | HB | 154 | 0 | 0 | Nice |
| S | 5.5 | Yes | 1.1 | HB | >200 | 0 | 69 | Nice |
| T | 2 | No | - | - | - | - | - | - |
| U | 3.85 | Yes | 0.9 | HB | >200 | 0 | 0 | Nice |

The results show generally that the styrene-containing polymers can be made compatible with the epoxy resin by incorporating at least 2.0 meq/g of epoxy into the polymer. The polymers that do not contain styrene require at least 3.0 meq/g of epoxy to be compatible.

Example 19

Polymer P from Example 18 was hydrogenated before epoxidation such that the B block was completely hydrogenated and the I blocks retained some unsaturation. The polymer was epoxidized to epoxy contents of 1.2, 1.3, and 1.9 meq/g. None of these polymers proved to be compatible in the formulation of Example 18.

Polymer M was hydrogenated in the same manner as described in the previous paragraph and epoxidized to an epoxy content of 3.0 meq/g. When evaluated in the formulation of Example 18, the polymer was incompatible. These experiments lead to the conclusion that hydrogenated polymers are less compatible than unsaturated polymers at the same epoxy content and that epoxidation to levels greater than 3.0 meq/gm would be required to make hydrogenated polymers which are compatible with cycloaliphatic epoxy resins.

Example 20

Polymer V was made by anionic polymerization with sec-butyl lithium, selective hydrogenation with nickel/aluminium, and epoxidation with peracetic acid. The polymer can be described as an epoxidized I-S/EB-I linear sequentially polymerized polymer, where I represents a 1000 MW block of polyisoprene and S/EB represents a hydrogenated, 4000 MW random styrene/butadiene (2500 MW S/1500 MW B) block. The partially hydrogenated polyisoprene endblocks are epoxidized to give 1.2 milliequivalent of epoxy per gram of polymer (about 7 epoxide groups per molecule, about 3 or 4 on each end of the S/EB block). The predominant functional group is the epoxidized 1,4-isoprene repeat unit on the ends of the polymer.

Coating formulations were mixed by weighing all components into a jar, heating to about 100°C and mixing manually. Coatings, heated if necessary to reduce viscosity, were drawn on steel (QD412) or aluminum (A412) Q-Panels using a #22 or #52 wire rod. They were cured by exposure to 1 medium pressure mercury lamp at various line speeds, usually 30 feet per minute (fpm) - 9 metres per minute. Samples were usually given a postbake of 10 minutes at either 120°C or 80°C after irradiation to complete the cure.

The cycloaliphatic epoxy resin selected for evaluation was CYRACURE UVR-6110. 20 percent weight of Polymer V could be mixed into hot UVR-6110 but the blend phase separated upon cooling to room temperature. UVR-6110 and RAPI-CURE CHVE, cyclohexane dimethanol divinyl ether (CHVE) from ISP, Inc., were blended at 80/20, 60/40, 40/60 and 20/80 ratios by weight. They formed clear, compatible blends. Polymer V was then added at 20, 40, 60 and 80 percent by weight to each of these UVR-6110/CHVE blends. Table XIX shows which blends were phase stable at room temperature and gives their viscosities. The results show that adding as little as 20 percent weight CHVE to UVR-6110 gives enough improvement in compatibility that phase stable blends with Polymer V can be made. In UVR-6110/CHVE blends containing higher fractions of CHVE, the viscosity is lower and so higher concentrations of Polymer V can be incorporated before viscosity becomes too high to coat easily. The results also show that increasing the temperature is effective in reducing the viscosity, making it possible to coat the higher polymer content blends at elevated temperatures.

Table XIX

| Viscosity of EKP-204 in UVR-6110/CHVE Blends | | | | | | | |
|---|---|---|---|---|---|---|---|
| Resin Ratio | | 1 | 2 | 3 | 4 | 5 | 6 |
| UVR-6110<br>CHVE | | 100 | 80<br>20 | 60<br>40 | 40<br>60 | 20<br>80 | <br>100 |
| %w Polymer V in Resin | Temp, (C) | Brookfield Viscosity, mPas | | | | | |
| 0 | 25 | 400 | 160 | 70 | 30 | 12 | 5 |
| 20<br>20<br>20 | 25<br>35<br>55 | a) | 675<br>350<br>130 | 415<br>215<br>80 | 160<br>80<br>30 | 80<br>40<br>15 | 35<br>25<br>9 |
| 40 | 25 | a) | 15000 | 3500 | 1650 | 735 | 425 |

a) Blends were mixed manually at about 100°C. Blends of Polymer V with UVR-6110 were incompatible at 25°C and phase separated.

Table XIX (continued)

| Viscosity of EKP-204 in UVR-6110/CHVE Blends | | | | | | | |
|---|---|---|---|---|---|---|---|
| %w Polymer V in Resin | Temp, (C) | Brookfield Viscosity, mPas | | | | | |
| 40 | 35 | | 8500 | 1620 | 750 | 400 | 245 |
| 40 | 55 | | 870 | 450 | 270 | 140 | 95 |
| 60 | 25 | a) | | | | 8000 | 4500 |
| 60 | 35 | | | | 6000 | 3500 | 2140 |
| 60 | 55 | | | | 1420 | 870 | 600 |
| 80 | 35 | a) | | | | 51000 | 30000 |
| 80 | 55 | | | | 11000 | 7150 | 5500 |

a) Blends were mixed manually at about 100°C. Blends of Polymer V with UVR-6110 were incompatible at 25°C and phase separated.

The cationic photoinitiator, CYRACURE UVI-6974, was added at 1 percent by weight to the blends in Table XIX. After coating several formulations onto aluminium panels, it was apparent that a wetting agent was needed in the formulation. Therefore, 0.1 percent by weight FLUORAD FC-430 was added to each blend. After adding the wetting agent and after warming the high viscosity samples, fairly nice looking coatings were made from all of the compatible blends in Table XIX. The coatings on aluminium were exposed to UV radiation at 30 fpm (9 mpm) line speed. Most of the coatings were still liquid after exiting the UV machine so all samples were given a postbake for 10 minutes at 120°C.

Table XX presents the qualitative evaluation of the irradiated and postbaked coatings. The phase stable coatings at 80/20 UVR-6110/CHVE seemed cured satisfactorily but were cloudy. Clear coatings with Polymer V were obtained when the UVR-6110/CHVE blend contained at least 40 percent CHVE. Generally, coating appearance improved as the CHVE proportion in the UVR-6110/CHVE blend increased. And generally, as the fraction of Polymer V in the blend increased, cure became more difficult (probably because of poor solubility of UVI-6974 in Polymer V and CHVE).

Example 21

The performance of Polymer V and a conventional modifier of cationic cure coatings such as TONE 0201, a polycaprolactone diol from Union Carbide, were compared. Since Polymer V could only be used in UVR-6110/CHVE blends containing at least about 40 percent weight CHVE, TONE 0201 was tested both in UVR-6110 and in a 60/40 UVR-6110/CHVE blend. These are formulations 1-6 in Table XXI. The results show that TONE 0201 performs about the same in either formulation at the same polymer content. Therefore, comparison of Polymer V and TONE 0201 in the 60/40 UVR-6110/CHVE blend is reasonable.

The results in Table XXI show that TONE 0201 and Polymer V perform about the same at 10 percent by weight in the formulation. Although not shown by the data in Table XXI, there is a major improvement caused by addition of either polymer. After the cured, unmodified coatings of Formulations 1 or 4 on aluminium or steel sit at room temperature for several days, they begin to disbond totally. TONE 0201 or Polymer V at 10 percent by weight in the formulation both prevent this disbonding. However, both coatings with 10 percent by weight of the polymers still fail the mandrel bend test on aluminium and the wedge bend test on steel. Both formulations with 20 percent by weight polymer pass the mandrel bend test. The formulation with 20 percent by weight TONE 0201 gives better performance in the wedge bend test on steel while the formulation with 20 percent by weight Polymer V gives better adhesion and MEK resistance on aluminum.

This work shows that hydrogenated polymers are more limited than unhydrogenated polymers in that they are incompatible with cycloaliphatic epoxy resins. However, cationic cure formulations can be made with hydrogenated polymers in a blend containing at least about 20 percent by weight CHVE. In a 60/40 blend, Polymer V performed comparably to a polycaprolactone diol modifier, TONE 0201.

Table XX

Compatibility of Polymer V in UVR-6110/CHVE/UVI-6974

| Resin Ratio (a) | | 1 | 2 | 3 | 4 | 5 | 6 |
|---|---|---|---|---|---|---|---|
| UVR-6110<br>CHVE | | 100<br>0 | 80<br>20 | 60<br>40 | 40<br>60 | 20<br>80 | 0<br>100 |
| %wt Polymer V in resin blend | Coating Property (b,c) | 1 | 2 | 3 | 4 | 5 | 6 |
| 20 | Blend Stability | Separated | Cloudy | Clear | Clear | Clear | Clear |
| | Coating Tack | | Sl. tack | Sl. tack | Sl. tack | No tack | No tack |
| | Coating Surface | | Sl. craze (d) | Sl. craze (d) | Craze (d) | Craze (d) | Good |
| 40 | Blend Stability | Separated | Cloudy | Clear | Clear | Clear | Clear |
| | Coating Tack | | Sl. tack | Sl. tack | Sl. tack | No tack | No tack |
| | Coating Surface | | | Good | Good | Good | Good |
| 60 | Blend Stability | Separated | Separated | Separated | Cloudy | Cloudy | Clear |
| | Coating Tack | | Tacky | Tacky | Tacky | Sl. tack | Sl. tack |
| 80 | Blend Stability | Separated | Separated | Separated | Separated | Separated | Clear |
| | Coating Tack | | Uncured | Uncured | Uncured | Uncured | Uncured |

(a) All blends were mixed @ 120°C. All blends contained 1 percent by weight UVI-6974 and 0.1 percent by weight FLUORAD FC-430.

(b) Blend Stability is phase stability of blend at room temperature.

(c) Blends were coated at 120°C onto aluminium substrates with #52 wire wound rod. Coatings were exposed to UV @ 30 fpm (9 mpm) and postbaked 10 minutes @ 120°C. Coatings developed a strong, offensive odour after postbake.

(d) Craze is surface imperfections-small cracks.

Table XXI

Toughening UV Cured Coatings with TONE 0201 and Polymer V

| Composition, %wt (a,b) | 1 | 2 | 3 | 4 | 5 | 6 | 7 | 8 |
|---|---|---|---|---|---|---|---|---|
| UVR-6110 | 99.6 | 89.4 | 79.4 | 59.6 | 53.6 | 47.6 | 53.6 | 47.6 |
| RAPI-CURE CHVE | | | | 39.8 | 35.8 | 31.8 | 35.8 | 31.8 |
| UVI-6974 | 0.5 | 0.5 | 0.5 | 0.5 | 0.5 | 0.5 | 0.5 | 0.5 |
| FLUORAD FC-430 | 0.1 | 0.1 | 0.1 | 0.1 | 0.1 | 0.1 | 0.1 | 0.1 |
| TONE 0201 | | 10 | 20 | | 10 | 20 | | |
| Polymer V | | | | | | | 10 | 20 |
| Properties on Aluminium | 1 | 2 | 3 | 4 | 5 | 6 | 7 | 8 |
| Thickness, mil | 1.3 | 1.2 | 1.4 | 1.3 | 1.3 | 1.1 | 1.2 | 1.2 |
| 60 Degree Gloss | 177 | 177 | 175 | 180 | 172 | 174 | 67 | 147 |
| Pencil Hardness | HB | HB | HB | HB | HB | HB | HB | HB |
| Crosshatch Adhesion | 0 | 0 | 0 | 0 | 0 | 1 | 0 | 5 |
| MEK Double Rubs | 200 | 200 | 200 | 200 | 200 | 32 | 200 | 190 |
| Mandrel Bend | Delam | Delam | Exc | Delam | Delam | Exc | Delam | Exc, White |

Table XXI (continued)

Toughening UV Cured Coatings with TONE 0201 and Polymer V

| Properties on Steel | 1 | 2 | 3 | 4 | 5 | 6 | 7 | 8 |
|---|---|---|---|---|---|---|---|---|
| Pencil Hardness | 3H | 2H | HB | HB | HB | HB | F | HB |
| Crosshatch Adhesion | 0 | 0 | 0 | 0 | 0 | 4 | 0 | 4 |
| Wedge Bend, mm | 75 | 75 | 72 | 75 | 75 | 19 | 75 | 75 |

(a) The formulations were mixed at 60°C. They were coated on aluminium (A412) or steel (D36) Q-panels with 22 wire rod. They were irradiated at 10 fpm (3 mpm) and baked 10 minutes at 80°C.

(b) Crosshatch Adhesion Scale: 5 = No adhesion loss, 0 = >65% adhesion loss.

## Claims

1. A toughened epoxy resin composition comprising:

   (a) a curable aromatic and/or a curable cycloaliphatic epoxy resin,
   (b) an epoxidized low viscosity polydiene polymer having an overall peak molecular weight as determined by GPC in the range of from 1100 to 300,000, and having the structural formula

   $$(A\text{-}B\text{-}A_p)_n\text{-}Y_r\text{-}(A_q\text{-}B)_m$$

   wherein Y is a coupling agent or coupling monomer or initiator, and wherein each A and each B independently is a polymer block which is a homopolymer block of conjugated diolefin monomers, a copolymer block of conjugated diolefin monomers, or a copolymer block of a conjugated diolefin monomer and a vinyl aromatic hydrocarbon monomer, each A block having a molecular weight in the range of from 100 to 6,000 and each B block having a molecular weight in the range of from 1000 to 15,000, n is greater than 0, r is 0 or 1, m is greater than or equal to 0, n + m is in the range of from 1 to 100, and p and q may be 0 or 1,
   wherein the A blocks have a greater concentration of di-, tri-, and tetrasubstituted unsaturation sites than have the B blocks, and
   (c) a curing agent

   wherein the epoxidised low viscosity polydiene polymer is selected from polymers of the formula I-B; I-B/S; I/S-B; I/S-B/I; I-B/I; I/B-B; I/B-B/S; B/I-B/S; B-B/S; B/S-B;
   $B_{mono\ substituted}$-$B_{Disubstituted}$; $(I\text{-}B)_4$; I/S-B-I/S;
   B-I/S-B; B/S-I-B/S; or I-S/B-I;
   in which I is isoprene, B is butadiene, S is styrene and a slash indicates a random copolymer block, and

   (i) contains less than 5% by weight vinyl aromatic hydrocarbon and has an epoxy content of in the range of from 3.0 to 7.0 milliequivalents (meq) per gram of polymer
   or
   (ii) contains 5% or more or, for aromatic epoxy resin blends, in the range of from 5 to less than 20% by weight vinyl aromatic hydrocarbon and has an epoxy content of in the range of from 2.0 to 7.0 meq/g
   or, for aromatic epoxy resin blends,
   (iii) contains 20%-60% by weight vinyl aromatic hydrocarbon and has an epoxy content of in the range of from 1.5 to 7.0 meq/g, with the proviso that if the epoxy resin is a curable aromatic epoxy resin, then the epoxidized low viscosity polydiene polymer has an epoxy content greater than 3 meq/g.

2. A composition as claimed in claim 1, in which the epoxy resin is a curable cycloaliphatic epoxy resin and the epoxidised low viscosity polydiene polymer

   (a) contains less than 5% by weight vinyl aromatic hydrocarbon and has an epoxy content in the range of from 3 to 6 meq/g of polymer
   or
   (b) contains in the range of from 5 to 50% by weight vinyl aromatic hydrocarbon and has an epoxy content in the range of from 2 to 6 meq/g of polymer.

3. A composition as claimed in claim 1, wherein polymer (i) has an epoxy content in the range of from 4.5 to 5.5 meq/g, polymer (ii) has an epoxy content in the range of from 4.0 to 5.5 meq/g and polymer (iii) has an epoxy content in the range of from 2.0 to 4.5 meq/g.

4. A composition as claimed in claim 2, wherein the epoxidised low viscosity polydiene polymer has an epoxy content in the range of from 3.5 to 5.0 meq/g regardless of the amount of vinyl aromatic hydrocarbon.

5. A composition as claimed in any one of claims 1 to 4, in which the epoxy resin is solely a curable cycloaliphatic epoxy resin, the epoxidised low viscosity polydiene polymer is partially hydrogenated and at least 20% by weight of a vinyl ether is additionally present.

6. A composition as claimed in any one of claims 1 to 5, wherein an accelerator is added and the composition is cured.

7. The use of a composition as claimed in any one of claims 1 to 6 in adhesives and in coatings.

8. An epoxidised low viscosity polydiene polymer as defined in claim 1, with the proviso that it has an epoxy group content of more than 5.0 meq/g.

9. The use of an epoxidised low viscosity polydiene polymer as defined in claim 1, as a toughening modifier for aromatic and/or cycloaliphatic epoxy resin compositions, with the proviso that if the epoxy resin is a curable aromatic epoxy resin, then the epoxidized low viscosity polydiene polymer has an epoxy content of more than 3.0 meq/g.

**Patentansprüche**

1. Zähgemachte Epoxyharzzusammensetzung, umfassend:

(a) ein härtbares aromatisches und/oder ein härtbares cycloaliphatisches Epoxyharz,
(b) ein niedrigviskoses epoxidiertes Polydienpolymer mit einem Gesamt-Peak-Molekulargewicht, bestimmt durch GPC, im Bereich von 1.100 bis 300.000 und mit der Strukturformel

$$(A\text{-}B\text{-}A_p)_n\text{-}Y_r\text{-}(A_q\text{-}B)_m,$$

worin Y ein Kupplungsmittel oder Kupplungsmonomer oder Initiator ist und worin jedes A und jedes B unabhängig voneinander ein Polymerblock sind, der ein Homopolymerbock aus konjugierten Diolefinmonomeren, ein Copolymerblock aus konjugierten Diolefinmonomeren oder ein Copolymerblock aus einem konjugierten Diolefinmonomer und einem vinylaromatischen Kohlenwasserstoffmonomer ist, jeder Block A ein Molekulargewicht im Bereich von 100 bis 6.000 aufweist und jeder Block B ein Molekulargewicht im Bereich von 1.000 bis 15.000 aufweist, n größer als 0 ist, r den Wert 0 oder 1 hat, m größer als oder gleich 0 ist, n+m im Bereich von 1 bis 100 liegt und p und q den Wert 0 oder 1 aufweisen können, wobei die Blöcke A eine größere Konzentration an di-, tri- und tetrasubstituierten Unsättigungsstellen aufweisen als die Blöcke B, und
(c) ein Härtungsmittel,

worin das epoxidierte niedrigviskose Polydienpolymer unter Polymeren mit der Formel I-B; I-B/S; I/S-B; I/S-B/I; I-B/I; I/B-B; I/B-B/S; B/I-B/S; B-B/S; B/S-B; $B_{monosubstituiert}$-$B_{disubstituiert}$; $(I\text{-}B)_4$; I/S-B-I/S; B-I/S-B; B/S-I-B/S; oder I-S/B-I ausgewählt ist, worin I für Isopren steht, B Butadien bedeutet, S Styrol ist und ein Schrägstrich einen statistischen Copolymerblock angibt, und

(i) weniger als 5 Gew.-% vinylaromatischen Kohlenwasserstoff enthält und einen Epoxygehalt im Bereich von 3,0 bis 7,0 Milliäquivalent (mAq) pro Gramm Polymer aufweist,
oder
(ii) 5% oder mehr oder, für aromatische Epoxyharzgemische, im Bereich von 5 bis weniger als 20 Gew.-% vinylaromatischen Kohlenwasserstoff enthält und einen Epoxygehalt im Bereich von 2,0 bis 7,0 mÄq/g aufweist,
oder, für aromatische Epoxyharzgemische,
(iii) 20-60 Gew.-% vinylaromatischen Kohlenwasserstoff enthält und einen Epoxygehalt im Bereich von 1,5 bis 7,0 mÄq/g aufweist, mit der Maßgabe, daß dann, wenn das Epoxyharz ein härtbares aromatisches Epoxyharz ist, das epoxidierte niedrigviskose Polydienpolymer einen Epoxygehalt von über 3 mÄq/g aufweist.

2. Zusammensetzung nach Anspruch 1, worin das Epoxyharz ein härtbares cycloaliphatisches Epoxyharz ist und das epoxidierte niedrigviskose Polydienpolymer

(a) weniger als 5 Gew.-% vinylaromatischen Kohlenwasserstoff enthält und einen Epoxygehalt im Bereich von 3 bis 6 mÄq/g Polymer aufweist,
oder
(b) 5 bis 50 Gew.-% vinylaromatischen Kohlenwasserstoff enthält und einen Epoxygehalt im Bereich von 2 bis 6 mÄq/g Polymer aufweist.

3. Zusammensetzung nach Anspruch 1, worin das Polymer (i) einen Epoxygehalt im Bereich von 4,5 bis 5,5 mÄq/g

aufweist, das Polymer (ii) einen Epoxygehalt im Bereich von 4,0 bis 5,5 mÄq/g aufweist und das Polymer (iii) einen Epoxygehalt im Bereich von 2,0 bis 4,5 mÄq/g aufweist.

**4.** Zusammensetzung nach Anspruch 2, worin das epoxidierte niedrigviskose Polydienpolymer einen Epoxygehalt im Bereich von 3,5 bis 5,0 mÄq/g aufweist, unabhängig von der Menge des vinylaromatischen Kohlenwasserstoffes.

**5.** Zusammensetzung nach einem der Ansprüche 1 bis 4, worin das Epoxyharz ausschließlich ein härtbares cycloaliphatisches Epoxyharz ist, das epoxidierte niedrigviskose Polydienpolymer partiell hydriert ist und zusätzlich wenigstens 20 Gew.-% eines Vinylethers zugegen sind.

**6.** Zusammensetzung nach einem der Ansprüche 1 bis 5, worin ein Beschleuniger zugesetzt und die Zusammensetzung gehärtet ist.

**7.** Verwendung einer Zusammensetzung nach einem der Ansprüche 1 bis 6 in Klebstoffen und in Beschichtungsmitteln.

**8.** Epoxidiertes niedrigviskoses Polydienpolymer, wie in Anspruch 1 definiert, mit der Maßgabe, daß es einen Epoxygruppengehalt von über 5,0 mÄq/g aufweist.

**9.** Verwendung eines epoxidierten niedrigviskosen Polydienpolymers, wie in Anspruch 1 definiert, als Zähigkeitsmodifikator für aromatische und/oder cycloaliphatische Epoxyharzzusammensetzungen, mit der Maßgabe, daß dann, wenn das Epoxyharz ein härtbares aromatisches Epoxyharz ist, das epoxidierte niedrigviskose Polydienpolymer einen Epoxygehalt von über 3,0 mÄq/g aufweist.

## Revendications

**1.** Composition de résine époxy rendue tenace comprenant :

(a) une résine époxy aromatique durcissable et/ou cycloaliphatique durcissable,
(b) un polymère de polydiène de faible viscosité époxydé ayant un poids moléculaire de pic global tel que déterminé par CPG allant de 1100 à 300.000, et ayant la formule structurale :

$$(A\text{-}B\text{-}A_p)_n\text{-}Y_r\text{-}(A_q\text{-}B)_m$$

dans laquelle Y est un agent de couplage ou monomère de couplage ou initiateur, et dans laquelle chaque A et chaque B représentent indépendamment un bloc de polymère qui est un bloc d'homopolymère de monomères de dioléfine conjuguée, un bloc de copolymère de monomères de dioléfine conjuguée, ou un bloc de copolymère d'un monomère de dioléfine conjuguée et d'un monomère d'hydrocarbure vinyl aromatique, chaque bloc A ayant un poids moléculaire allant de 100 à 6.000 et chaque bloc B ayant un poids moléculaire allant de 1.000 à 15.000, n est supérieur à 0, r est égal à 0 ou 1, m est supérieur ou égal à 0, n + m vaut de 1 à 100, et p et q peuvent être égaux à 0 ou 1,
dans laquelle les blocs A ont une concentration plus élevée de sites d'insaturation di-, tri- et tétrasubstituée que les blocs B, et
(c) un agent de durcissement,

dans laquelle le polymère de polydiène de faible viscosité époxydé est choisi parmi les polymères de la formule I-B; I-B/S; I/S-B; I/S-B/I; I-B/I; I/B-B; I/B-B/S; B/I-B/S; B-B/S; B/S-B; $B_{monosubstitué}$-$B_{disubstitué}$; $(I\text{-}B)_4$; I/S-B-I/S; B-I/S-B; B/S-I-B/S ou I-S/B-I;
formules dans lesquelles I est de l'isoprène, B est du butadiène, S est du styrène et une barre oblique représente un bloc de copolymère aléatoire, et

(i) contient moins de 5% en poids d'hydrocarbure vinyl aromatique et a une teneur en époxy allant de 3,0 à 7,0 milliéquivalents (méq) par gramme de polymère,
ou
(ii) contient 5% ou plus ou, pour les mélanges de résines époxy aromatiques, de 5 à moins de 20% en poids

d'hydrocarbure vinyl aromatique et a une teneur en époxy allant de 2,0 à 7,0 méq/g
ou, pour les mélanges de résines époxy aromatiques,
(iii) contient 20%-60% en poids d'hydrocarbure vinyl aromatique et a une teneur en époxy de 1,5 à 7,0 méq/g, à la condition que si la résine époxy est une résine époxy aromatique durcissable, alors le polymère de polydiène de faible viscosité époxydé a une teneur en époxy supérieure à 3 méq/g.

**2.** Composition suivant la revendication 1, dans laquelle la résine époxy est une résine époxy cycloaliphatique durcissable et le polymère de polydiène de faible viscosité époxydé

(a) contient moins de 5% en poids d'hydrocarbure vinyl aromatique et a une teneur en époxy allant de 3 à 6 méq/g de polymère,
ou
(b) contient de 5 à 50% en poids d'hydrocarbure vinyl aromatique et a une teneur en époxy allant de 2 à 6 méq/g de polymère.

**3.** Composition suivant la revendication 1, dans laquelle le polymère (i) a une teneur en époxy allant de 4,5 à 5,5 méq/g, le polymère (ii) a une teneur en époxy allant de 4,0 à 5,5 méq/g et le polymère (iii) a une teneur en époxy allant de 2,0 à 4,5 méq/g.

**4.** Composition suivant la revendication 2, dans laquelle le polymère de polydiène de faible viscosité époxydé a une teneur en époxy allant de 3,5 à 5,0 méq/g quelle que soit la quantité d'hydrocarbure vinyl aromatique.

**5.** Composition suivant l'une quelconque des revendications 1 à 4, dans laquelle la résine époxy est exclusivement une résine époxy cycloaliphatique durcissable, le polymère de polydiène de faible viscosité époxydé est partiellement hydrogéné et au moins 20% en poids d'un éther vinylique sont additionnellement présents.

**6.** Composition suivant l'une quelconque des revendications 1 à 5, dans laquelle un accélérateur est ajouté et la composition est durcie.

**7.** Utilisation d'une composition suivant l'une quelconque des revendications 1 à 6, dans des adhésifs et dans des revêtements.

**8.** Polymère de polydiène de faible viscosité époxydé suivant la revendication 1, à la condition qu'il ait une teneur en groupes époxy de pas plus de 5,0 méq/g.

**9.** Utilisation d'un polymère de polydiène de faible viscosité époxydé suivant la revendication 1, comme modificateur de ténacité pour des compositions de résines époxy aromatiques et/ou cycloaliphatiques, à la condition que si la résine époxy est une résine époxy aromatique durcissable, alors le polymère de polydiène de faible viscosité époxydé a une teneur en époxy de plus de 3,0 méq/g.